# EUROPEAN PATENT APPLICATION

(11) **EP 4 462 076 A2**
(43) Date of publication of application: **13.11.2024**
(21) Application number: 24170897.3
(22) Date of filing: 17.04.2024
(51) Int. Cl.: G01C 21/00, G01S 17/89

(54) **SYSTEMS AND METHODS OF MAINTAINING MAP FOR AUTONOMOUS DRIVING**

(30) Priority: 17.04.2023 US 202363496613 P
(71) Applicant: TuSimple, Inc., San Diego, CA 92122 (US)
(72) Inventor: HUNG, Wan-Ting, San Diego, 92122 (US); WANG, Anping, San Diego, 92122 (US); XU, Ke, San Diego, 92122 (US); ZHAO, Guoxiang, San Diego, 92122 (US); ZHANG, Bolun, San Diego, 92122 (US); YU, Nan, San Diego, 92122 (US)
(74) Representative: Hamer, Thomas Daniel

(57) **Abstract**

The present disclosure provides methods and systems of maintaining a map suitable for guiding autonomous driving. In some embodiments, the method may include receiving a sensor dataset acquired by a sensor subsystem, wherein: the sensor dataset includes information about a road, the sensor subsystem comprises multiple different types of sensors; determining, by a processor, a confidence level by comparing the sensor dataset and the map that includes prior information about the road; in response to determining that the confidence level exceeds a confidence threshold, processing the map by the processor; and storing the processed map as an electronic file, wherein the processed map is configured to guide an autonomous vehicle to operate on the road.

## Description

### TECHNICAL FIELD

This document relates to systems, apparatus, and methods of updating a map for autonomous vehicles.

### BACKGROUND

Autonomous vehicle navigation is a technology that can allow a vehicle to sense the position and movement of vehicles around an autonomous vehicle and, based on the sensing, control the autonomous vehicle to safely navigate towards a destination. An autonomous vehicle may operate in several modes. In some cases, an autonomous vehicle may allow a driver to operate the autonomous vehicle as a conventional vehicle by controlling the steering, throttle, clutch, gear shifter, and/or other devices. In other cases, a driver may engage the autonomous driving mode to allow the vehicle to drive itself.

### SUMMARY

An aspect of the present disclosure relates to a method of maintaining a map. The method includes: receiving, from a sensor subsystem, a sensor dataset that includes information about a road, wherein the sensor subsystem comprises multiple different types of sensors including at least one of a camera, a light detection and ranging (LiDAR) sensor, a positioning sensor, a radar sensor, or a mapping sensor, and the sensor dataset has a first spatial accuracy level of 50 centimeters or lower; determining, by a processor, a confidence level by comparing the sensor dataset and the map that includes prior information about the road, wherein the map has a second spatial accuracy level of 50 centimeters or lower; in response to determining that the confidence level exceeds a confidence threshold, processing the map by the processor; and storing the processed map as an electronic file, wherein the processed map is configured to guide an autonomous vehicle to operate on the road.

An aspect of the present disclosure relates to a system, including at least one processor and memory including computer program code which, when executed by the at least one processor, cause the system to effectuate any one of the methods for maintaining a map as described herein. In some embodiments, at least one of the at least one processor is installed outside a vehicle that operates according to the map maintained by the system.

An aspect of the present disclosure relates to a vehicle configured to communicate with a system of map maintenance as described herein. The vehicle may receive a notification or an updated map from the system. The vehicle may be an autonomous vehicle.

An aspect of the present disclosure relates to a non-transitory computer readable medium, which, when executed by at least one processor, cause a system or an autonomous vehicle to operation according to any one of the methods described herein.

The above and other aspects and their implementations are described in greater detail in the drawings, the descriptions, and the claims.

### BRIEF DESCRIPTION OF THE DRAWING

FIG. 1 illustrates a block diagram of an example vehicle ecosystem according to some embodiments of the present disclosure.
FIG. 2 shows a block diagram of an exemplary server configured to manage a map according to some embodiments of the present disclosure.
FIG. 3 shows a block diagram of an exemplary map maintenance module according to some embodiments of the present disclosure.
FIG. 4 shows a flowchart of an example process of maintaining a map according to some embodiments of the present disclosure.
FIG. 5 illustrates an example of comparing a road recorded in a sensor dataset and an existing map according to some embodiments of the present disclosure.
FIG. 6 shows an example map update tool product workflow according to some embodiments of the present disclosure.
FIGs. 7A-7Q show example user interface pages of a map update tool according to some embodiments of the present disclosure.

### DETAILED DESCRIPTION

A vehicle operating in fully or partially autonomous mode may rely on a map of the road on which the vehicle operates to make operation decision. Such a vehicle may include a computer located in the vehicle sending instructions to one or more devices in the vehicle to perform autonomous driving operations (e.g., steer, apply brakes, change gear, etc.,), where the instructions can be generated based on information of the environment from the map as well as from sensors (e.g., cameras, LiDARs, etc.,) on the vehicle, without or with reduced human intervention. Accordingly, a map for guiding autonomous driving needs to have an accuracy level higher than a conventional map. Although the computer takes into consideration of static and moving objects in the environment of the vehicle based on information from onboard sensors when making decisions for vehicle operations, a map up-to-date with sufficient accuracy may reduce the amount of data processing to be performed substantially real-time, thereby reducing the decision-making time, the computing capacities of the computer to be involved, improving safety and/or reliability of the autonomous driving, or the like, or a combination thereof.

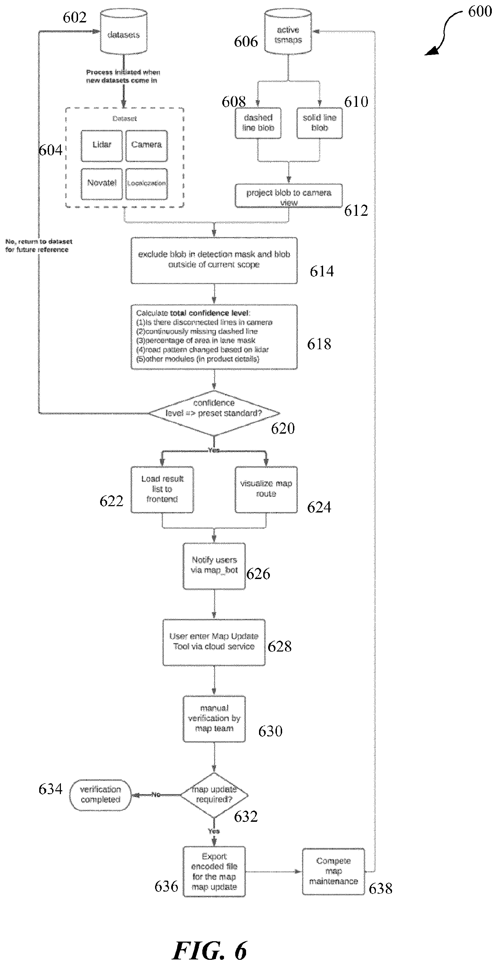

Embodiments of the present disclosure describes technical solutions include maintaining a map based on multifaceted datasets acquired by sensors of different types. In some embodiments, a processor may compare newly acquired multifaceted sensor datasets with an existing map of a road and determine a confidence level predicting the likelihood that the map, or a portion thereof (e.g., a road segment of a road in the map) needs to be updated. For example, a high confidence level may indicate a high likelihood that the map needs to be updated; a low confidence level may indicate a low likelihood that the map needs to be updated. The determination of the confidence level may also take into consideration of one or more factors including, e.g., a road object projection angle, camera views, etc. (e.g., as described with reference to 608, 610, and 612 illustrated in FIG. 6), to prevent or reduce false positives or false negatives in the prediction of whether there is a change on the road sufficient to trigger a map update. In response to determining that the confidence level exceeds a threshold, the processor may update the map automatically or based on input from an operator. For instance, the processor may generate a report to be output to the operator alerting the operator that the confidence level exceeds the threshold; the operator may provide an instruction on whether to update the map. The technical solutions as described in various embodiments of the present disclosure may achieve one or more of the following technical effects. The acquisition and application of the multifaceted datasets may improve the accuracy of downstream results including, e.g., the confidence level and/or an updated map determined based on the datasets, thereby improving the efficiency and/or quality of the map maintenance. The full or partial automation of the map maintenance process may further improve the efficiency and/or accuracy of the process, reducing or removing cross-user variations or delay in the process. These and other technical effects of the technical solutions described herein may ultimately improve safety of a vehicle operations on the basis of the map so acquired/maintained.

### I. Example Vehicle Ecosystem for Autonomous Driving

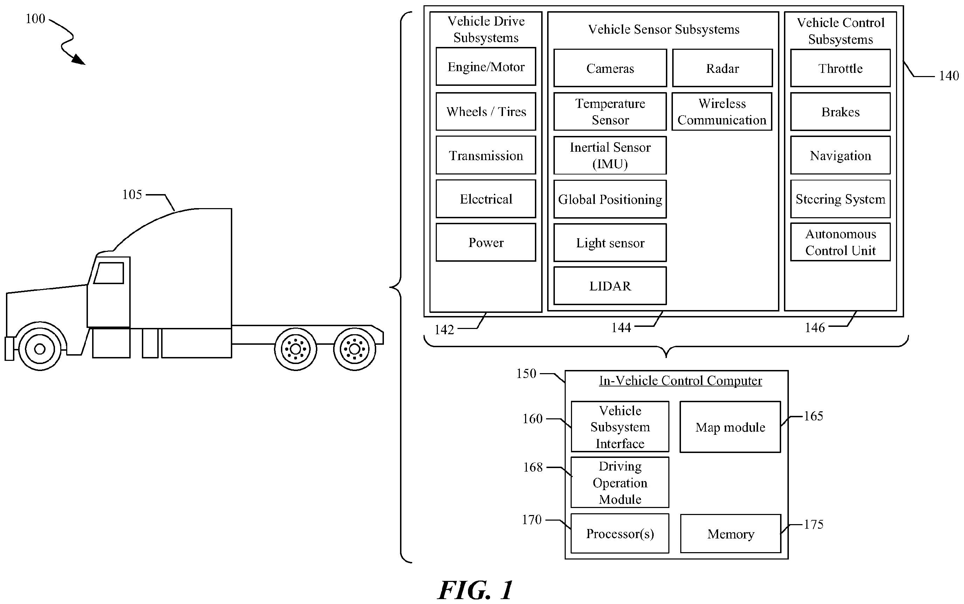

FIG. 1 illustrates a block diagram of an example vehicle ecosystem according to some embodiments of the present disclosure. The system 100 may include an autonomous vehicle 105, such as a tractor unit of a semi-trailer truck. The autonomous vehicle 105 may include a plurality of vehicle subsystems 140 and an in-vehicle control computer 150. The plurality of vehicle subsystems 140 can include, for example, vehicle drive subsystems 142, vehicle sensor subsystems 144, and vehicle control subsystems 146. FIG. 1 shows several devices or systems being associated with the autonomous vehicle 105. In some embodiments, additional devices or systems may be added to the autonomous vehicle 105, and in some embodiments, some of the devices or systems shown in FIG. 1 may be removed from the autonomous vehicle 105.

An engine/motor, wheels and tires, a transmission, an electrical subsystem, and/or a power subsystem may be included in the vehicle drive subsystems 142. The engine/motor of the autonomous truck may be an internal combustion engine (or gas-powered engine), a fuel-cell powered electric engine, a battery powered electric engine/motor, a hybrid engine, or another type of engine capable of actuating the wheels on which the autonomous vehicle 105 (also referred to as vehicle 105 or truck 105) moves. The engine/motor of the autonomous vehicle 105 can have multiple engines to drive its wheels. For example, the vehicle drive subsystems 142 can include two or more electrically driven motors.

The transmission of the vehicle 105 may include a continuous variable transmission or a set number of gears that translate power created by the engine of the vehicle 105 into a force that drives the wheels of the vehicle 105. The vehicle drive subsystems 142 may include an electrical system that monitors and controls the distribution of electrical current to components within the vehicle drive subsystems 142 (and/or within the vehicle subsystems 140), including pumps, fans, actuators, in-vehicle control computer 150 and/or sensors (e.g., cameras, LiDARs, RADARs, etc.). The power subsystem of the vehicle drive subsystems 142 may include components which regulate a power source of the vehicle 105.

Vehicle sensor subsystems 144 can include sensors which are used to support general operation of the autonomous truck 105. The sensors for general operation of the autonomous vehicle may include, for example, one or more cameras, a temperature sensor, an inertial sensor, a global positioning system (GPS) receiver, a light sensor, a LiDAR system, a radar system, and/or a wireless communications system.

The vehicle control subsystems 146 may include various elements, devices, or systems including, e.g., a throttle, a brake unit, a navigation unit, a steering system, and an autonomous control unit. The vehicle control subsystems 146 may be configured to control operation of the autonomous vehicle, or truck, 105 as a whole and operation of its various components. The throttle may be coupled to an accelerator pedal so that a position of the accelerator pedal can correspond to an amount of fuel or air that can enter the internal combustion engine. The accelerator pedal may include a position sensor that can sense a position of the accelerator pedal. The position sensor can output position values that indicate the positions of the accelerator pedal (e.g., indicating the amount by which the accelerator pedal is actuated.)

The brake unit can include any combination of mechanisms configured to decelerate the autonomous vehicle 105. The brake unit can use friction to slow the wheels of the vehicle in a standard manner. The brake unit may include an anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically based on, e.g., traffic or road conditions, while, e.g., the autonomous vehicle 105 is in operation. In some embodiments, the navigation unit may be configured to incorporate data from a GPS device and one or more predetermined maps so as to determine the driving path for the autonomous vehicle 105. The steering system may represent any combination of mechanisms that may be operable to adjust the heading of the autonomous vehicle 105 in an autonomous mode or in a drivercontrolled mode of the vehicle operation.

The autonomous control unit may include a control system (e.g., a computer or controller comprising a processor) configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some example embodiments, the autonomous control unit may be configured to incorporate data from the GPS device, the radar, the LiDAR, the cameras, and/or other vehicle sensors and subsystems to determine the driving path or trajectory for the autonomous vehicle 105.

An in-vehicle control computer 150, which may be referred to as a vehicle control unit or VCU, can include, for example, any one or more of: a vehicle subsystem interface 160, a map data sharing module 165, a driving operation module 168, one or more processors 170, and/or memory 175. This in-vehicle control computer 150 may control many, if not all, of the operations of the autonomous truck 105 in response to information from the various vehicle subsystems 140. The memory 175 may contain processing instructions (e.g., program logic) executable by the processor(s) 170 to perform various methods and/or functions of the autonomous vehicle 105, including those described in this patent document. For instance, the data processor 170 executes the operations associated with vehicle subsystem interface 160, map data sharing module 165, and/or driving operation module 168. The in-vehicle control computer 150 can control one or more elements, devices, or systems in the vehicle drive subsystems 142, vehicle sensor subsystems 144, and/or vehicle control subsystems 146. For example, the driving operation module 168 in the in-vehicle control computer 150 may operate the autonomous vehicle 105 in an autonomous mode in which the driving operation module 168 can send instructions to various elements or devices or systems in the autonomous vehicle 105 to enable the autonomous vehicle to drive along a determined trajectory. For example, the driving operation module 168 can send instructions to the steering system to steer the autonomous vehicle 105 along a trajectory, and/or the driving operation module 168 can send instructions to apply an amount of brake force to the brakes to slow down or stop the autonomous vehicle 105.

The map data sharing module 165 can be also configured to communicate and/or interact via a vehicle subsystem interface 160 with the systems of the autonomous vehicle. The map data sharing module 165 can, for example, send and/or receive data related to the trajectory of the autonomous vehicle 105 as further explained in Section II. The vehicle subsystem interface 160 may include a software interface (e.g., application programming interface (API)) through which the map data sharing module 165 and/or the driving operation module 168 can send or receive information to one or more devices in the autonomous vehicle 105.

The memory 175 may include instructions to transmit data to, receive data from, interact with, or control one or more of the vehicle drive subsystems 142, vehicle sensor subsystems 144, or vehicle control subsystems 146. The in-vehicle control computer (VCU) 150 may control the operation of the autonomous vehicle 105 based on inputs received by the VCU from various vehicle subsystems (e.g., the vehicle drive subsystems 142, the vehicle sensor subsystems 144, and the vehicle control subsystems 146). The VCU 150 may, for example, send information (e.g., commands, instructions or data) to the vehicle control subsystems 146 to direct or control functions, operations or behavior of the autonomous vehicle 105 including, e.g., its trajectory, velocity, steering, braking, and signaling behaviors. The vehicle control subsystems 146 may receive a course of action to be taken from one or more modules of the VCU 150 and may, in turn, relay instructions to other subsystems to execute the course of action.

### II. Example Server for Map Maintenance

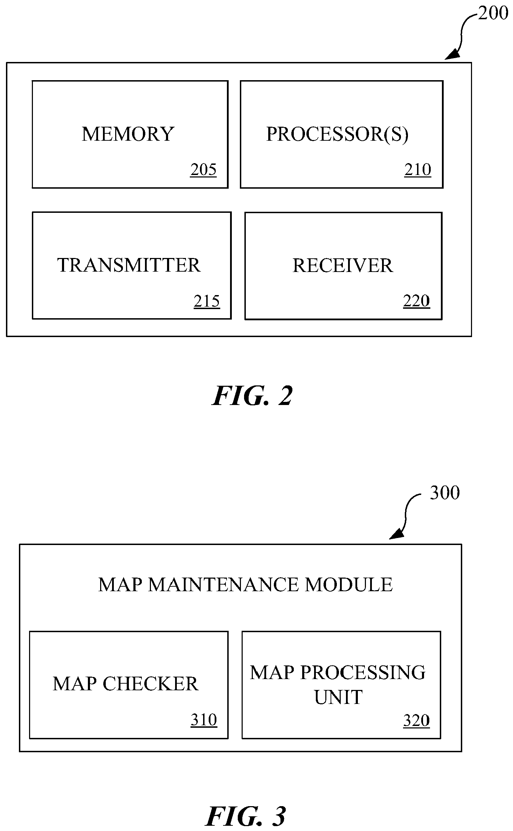

FIG. 2 shows a block diagram of an exemplary server (or system) configured to manage a map according to some embodiments of the present disclosure. The server 200 may include memory 205 and processor(s) 210. The memory 205 may have instructions stored thereupon. The instructions, upon execution by the processor(s) 210, may configure the server 200 (e.g., the various modules of the server 200) to perform the operations described elsewhere in the present disclosure including, e.g., those illustrated in FIGS. 1, 4, and/or 5.

In some embodiments, the server 200 may include a transmitter 215 and a receiver 220 configured to send and receive information, respectively. At least one of the transmitter 215 or the receiver 220 may facilitate communication via a wired connection and/or a wireless connection between the server 200 and a device or information resource external to the server 200. For instance, the server 200 may receive a sensor dataset acquired by sensors of a sensor subsystem 144 via the receiver 220. As another example, the server 200 may receive input from an operator via the receiver 220. As a further example, the server 200 may transmit a notification to a user (e.g., an autonomous vehicle, a display device) via the transmitter 215. In some embodiments, the transmitter 215 and the receiver 220 may be integrated into one communication device.

FIG. 3 shows a block diagram of an exemplary map maintenance module according to some embodiments of the present disclosure. The map maintenance module 300 may be implemented on the server 200. For instance, the map maintenance module 300 may be stored in the memory 205 and executed by one or more of the processor(s) 210. The map maintenance module 300 may include a map checker 310 and a map processing unit 320. The map checker 310 may be configured to check whether a map needs to be updated. In some embodiments, the map checker 310 may determine a confidence level by comparing newly acquired sensor dataset of a road acquired by sensors of different types and an existing map of the road. The confidence level may predict the likelihood that the existing map needs to be updated. The map processing unit 320 may process the existing map based on the confidence level. More descriptions of the operations for map maintenance may be found elsewhere in the present disclosure including, e.g., those illustrated in FIGS. 1, 4, and/or 5.

### III. Techniques for Maintaining Map for Autonomous Driving

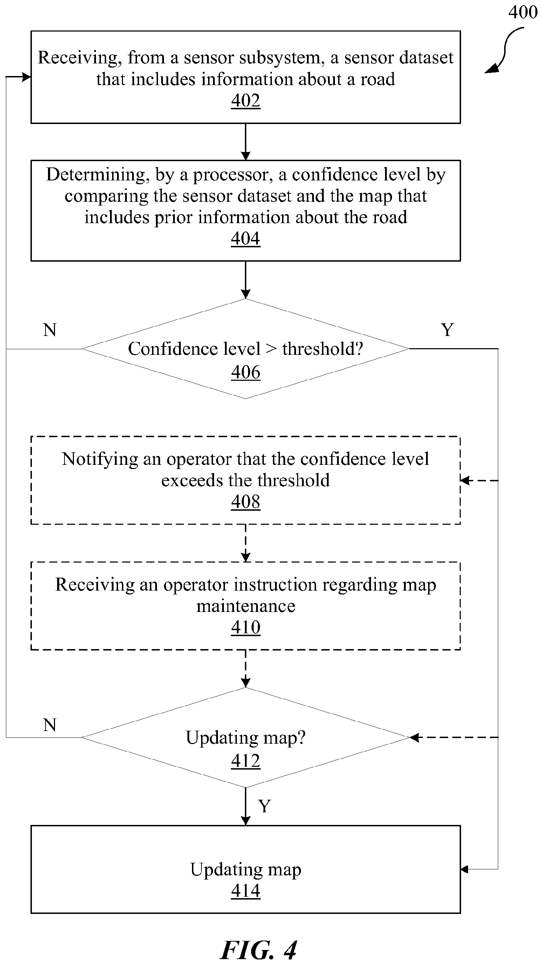

FIG. 4 shows a flowchart of an example process of maintaining a map according to some embodiments of the present disclosure. The system 200 may perform one or more operations of the process 400.

At 402, the system 200 (e.g., the map checker 310 of the map maintenance module 300) may receive a sensor dataset that includes information of a road. In some embodiments, the sensor dataset may be acquired by a sensor subsystem (e.g., one or more of the sensor subsystems 144 as illustrated in FIG. 1). The system 200 may retrieve the sensor dataset from a storage device or directly from the sensor subsystem of a vehicle.

The sensor dataset may include data acquired by multiple different types of sensors of the sensor subsystem. For instance, the sensor dataset may be acquired by sensors including at least one of a camera, a light detection and ranging (LiDAR) sensor, a positioning sensor, a radar sensor, or a mapping sensor, or the like, or a combination thereof. The sensor dataset may include a mixture of data acquired by such different sensors. The information of the road recorded in the sensor dataset may include, e.g., road markers on the road, curvature of the road, shape of the surface of the road available for vehicle passage, the surface contour (or topography) of the road, the height of a curb, the width of an intersection in the road, and the location of a traffic light or traffic sign (e.g., a stop sign, a yield sign), or the like, or a combination thereof. The sensor dataset may be acquired over a period of time, e.g., during the period in which a vehicle traverses the road. The mixture of data acquired by the different sensors may be registered based on the acquisition time and/or location so that the data corresponding to a same location that are acquired by different sensors may be grouped together. Accordingly, the sensor dataset may include data frames each corresponding to a location (e.g., a same portion of the road) and/or acquisition time.

In some embodiments, the sensor dataset may have a first spatial accuracy level of 50 centimeters or lower. For example, the sensor dataset may have a first spatial accuracy level of 50 centimeters, 40 centimeters, 30 centimeters, 20 centimeters, 10 centimeters, 8 centimeters, 6 centimeters, 5 centimeters, or below 5 centimeters.

At 404, the system 200 (e.g., the map checker 310 of the map maintenance module 300) may determine a confidence level by comparing the sensor dataset and the map that includes prior information about the road. In some embodiments, the map may be an existing one that is in use in the system 200. In some embodiments, the map may have a second spatial accuracy level of 50 centimeters or lower. For example, the sensor dataset may have a first spatial accuracy level of 50 centimeters, 40 centimeters, 30 centimeters, 20 centimeters, 10 centimeters, 8 centimeters, 6 centimeters, 5 centimeters, or below 5 centimeters. In some embodiments, the sensor data and the map may have a same or similar accuracy level to facilitate the comparison.

In some embodiments, the map may be stored according to a data structure, e.g., a binary data structure. In some embodiments, different elements of the map corresponding to different road objects may be stored as different binary objects with corresponding data units. A data unit for a road object may include information of the road object including, e.g., a class tag, a line type (e.g., a solid line, a dashed line), the color, dimension (e.g., length, width, curvature), and/or shape of a road marker. For example, the solid lines and dashed lines on the road may be stored as different binary objects. The information corresponding to the road objects may be converted to a format comparable with the newly acquired sensor dataset. For example, the system 200 may process the data units corresponding to a solid line and a dashed line to project the solid line and the dashed line to a camera view to be compared with the sensor dataset.

In some embodiments, the system 200 may pre-process the map and/or the sensor dataset to facilitate the comparison. For example, the system 200 may identify and remove information recorded in the sensor dataset that corresponds to moving objects (e.g., a vehicle, a passenger, a pedestrian) acquired by the sensors of the sensor subsystem. The system 200 may use an image segmentation algorithm, an element recognition algorithm, etc., for identifying an object recorded in the sensor dataset. The system 200 may combinate image data and data from a LiDAR sensor in this analysis. For example, data form a LiDAR sensor may provide information regarding static objects on the road including, e.g., fences, cones, traffic signs, or the like, or a combination thereof. The system 200 may categorize the object as a moving object or a static object based on its velocity and/or position (e.g., velocity and/or position relative to the velocity of the vehicle carrying the sensor subsystem), its shape, the condition of the ambient (e.g., weather, acquisition time (e.g., AM, PM).

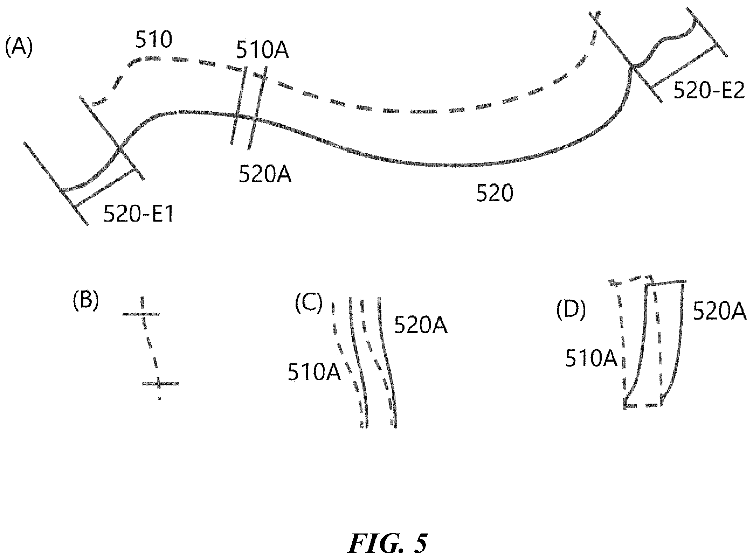

As another example, the system 200 may register the sensor dataset and the map so that information corresponding to a same location (e.g., a same portion of the road) is compared. The system 200 may perform the registration based on positioning information of the sensor dataset and the map. For example, the sensor dataset may be divided into data frames (or referred to as sensor data snippets), each corresponding to a duration of time (e.g., 10 milliseconds, 20 milliseconds, 30 milliseconds, 40 milliseconds, 50 milliseconds); a data frame of the sensor dataset (or a sensor data snippet) may include information corresponding to a portion of the road (e.g., a road segment) identified by location information including, e.g., the location information of the starting point and the end point of the portion of the road; the map may be divided into data frames that correspond to same portions of the road (e.g., same road segments as the corresponding data snippets of the sensor dataset) to facilitate the comparison. Any portion of the sensor dataset that does not have corresponding information in the map may be excluded from the comparison. Similarly, any portion of the map that does not have corresponding information in the sensor dataset may be excluded from the comparison. For example, any data unit (e.g., a road object in the existing map) that is outside the scope of the comparison (e.g., corresponding to a portion of the road whose information is recorded in one of the sensor dataset or the map but not the other) may be excluded from comparison. As another example, if a sensor data snippet corresponds to a scene in which a moving object occludes a road object (e.g., a vehicle crossing a dashed white line when the vehicle is changing lanes), the road object recorded in the sensor data snippet (e.g., an image captured using a camera) may be incomplete (e.g., from the camera view); the representation of the moving object may be excluded from the sensor data snippet before comparison, or the sensor data snippet may be excluded from comparison altogether. FIG. 5 illustrates the representation 510 of a road illustrated as a dashed line (referred to as road 510 for brevity) recorded in a map and a representation 520 of the same road illustrated as a solid line (referred to as road 520 for brevity) as recorded in the sensor dataset. Accordingly, at least a portion of the road 510 and at least a portion of the road 520 correspond to a same road in the physical world. The system 200 may register the road 510 as recorded in the map and the road 520 as recorded in the sessor dataset. The system 200 may recognize that a portion 520-E1 and a portion 520-E2 of the road 520 recorded in the sensor dataset are not represented in the road 510 in the map as illustrated in part (A) of FIG. 5, and therefore the portions 520-E1 and 520-E2 are excluded from the comparison with the road 510.

Based on the registered sensor dataset and the map, the system may determine a confidence level. The confidence level may predict the likelihood that there is a change in the road and/or that the map needs to be updated. The multifaceted information of the road recorded in the map and in the sensor dataset may allow for a multifaceted comparison, thereby improving the accuracy of the comparison, which in turn may improve the reliability of the confidence level determined based on the comparison. For example, the system 200 may compare the road marker, the curvature, the shape of the surface of the road available for vehicle passage, the surface contour (or topography) of the road, the height of a curb, the width of an intersection in the road, a traffic light or traffic sign (e.g., a stop sign, a yield sign), or the like, or a combination thereof, of the road based on information recorded in the map and in the sensor dataset, and generate a comprehensive confidence level based on the multifaceted comparison.

The system 200 may divide the road 510 and the road 520 (excluding the portions 520-E1 and 520-E2) into corresponding road units. For example, the system 200 may divided the road 510 and the road 520 into road units of (substantially) equal lengths. A road unit of the road 510 recorded in the map may correspond to a road unit of the road 520 recorded in the sensor dataset, and both may correspond to a (substantially) same road unit in the physical world. A road unit may correspond to multiple data frames of the map and also of the sensor dataset. The system 200 may compare the data frame(s) of a road unit recorded in the map with the data frame(s) of the corresponding road unit recorded in the sensor dataset frame by frame.

The system 200 may compare elements of the portion of the road represented in data frames from the map and from the sensor data corresponding to a same portion of the road, and/or corresponding to continuous portions of the road. In some embodiments, the system 200 may look for any change in a road marker, the curvature, the shape of the surface of the road available for vehicle passage, the surface contour (or topography) of the road, the height of a curb, the width of an intersection in the road, a traffic light or traffic sign (e.g., a stop sign, a yield sign), or the like, or a combination thereof. Example road markers may include a line pattern (a solid line, a dashed line, a double solid line) and/or color, road paint, a lane mask, etc. In some embodiments, between the data frames from the map and from the sensor dataset corresponding to a portion of the road, the system 200 may detect a change in a road marker including that a continuous line pattern (e.g., a solid line, a dashed line, a double line, the color of a line) on the road becomes disconnected or disappears as reflected in the image portion of the data frames. In some embodiments, the system 200 may further compare such a change as reflected in the data frames from the map and from the sensor dataset corresponding to continuous portions of the road. For instance, a solid line on the road becomes disconnected or disappears as reflected in the data frames corresponding to several continuous portions of the road may indicate that a solid line has been changed to a dashed line or that there is a change in the route pattern. As another example, a dashed line on the road becomes disconnected or disappears as reflected in the data frames corresponding to several continuous portions of the road may indicate that a dashed line has been changed to a solid line or that there is a change in the route pattern.

In some embodiments, between the data frames from the map and from the sensor dataset corresponding to a portion of the road, the system 200 may detect a change in a percentage of the area covered by a lane mask. A change in this element may indicate that there is an update in the road paint. This element may also be used to assess the accuracy of the data in the map (e.g., a road object of the map) compared to the actual lane mask in the physical world. Accordingly, a change in this element (e.g., a change that exceeds a threshold) between the data frames from the map and from the sensor dataset corresponding to the same portion of the road may indicate that there is an issue with the map or with the sensor dataset. Information with an issue may be excluded from further processing in the process 400 to avoid promulgation of the issue in the map of the road.

In some embodiments, between the data frames from the map and from the sensor dataset corresponding to a portion of the road, the system 200 may detect a change in a distance between road paint and/or lane masks. If the road paint or lane masks have a repetitive pattern, e.g., the road paint including lines as lane dividers on a multiple-lane road, the distance between lines in the data frame of the map has a first distance value, and the distance between lines in the data frame of the sensor data has a second distance value, the system 200 may determine that a change between the first distance value and the second distance value may indicate a change in the road pattern. If the distances between lines in the data frame of the map have different first distance values, or the distances between lines in the data frame of the sensor data have different second distance values, the system 200 may determine that there is an issue with the map or the sensor dataset or there is a change in the road pattern (e.g., a temporary lane pattern change due to road construction).

In some embodiments, between the data frames from the map and from the sensor dataset corresponding to a portion of the road, the system 200 may detect, based on LiDAR data, a change in a two-dimensional or three-dimensional element including, e.g., a road pattern change (e.g., addition or removal or lane dividers), a boundary change (e.g., a dashed line becoming a solid line due to road work, a slight line becoming a curved line to guide vehicles due to a newly implemented detour route), a change in an obstacle, a change in a landmark dimension (e.g., height, width, length), or the like, or a combination thereof.

Based on the multifaceted information in the map and in the sensor data, the system 200 may compare the map and the sensor data to identify and also verify a change and/or an issue in the information by corroborating the information of a same element acquired by different type of sensors, thereby improving the accuracy of the comparison, which in turn may improve the reliability of a confidence level determined based on the comparison.

An example comparison between a data frame of the road units 510A of 510 and a corresponding data frame of the road unit 520A of 520 are illustrated in parts (B) through (D) of FIG. 5. As illustrated, the system 200 may compare the road markers, curvature, and shapes of the surface of the road available for vehicle passage of the portion of the road recorded in the two data frames (e.g., one from a map and one from a sensor dataset), as illustrated in parts (B), (C), and (D), respectively.

The system 200 may assign a score to each of the elements compared based on, e.g., a difference in the element between the data frame from the map and the corresponding data frame from the sensor dataset. For example, a high score may indicate a significant difference in the element is detected between the data frame from the map and the corresponding data frame from the sensor dataset; a low score may indicate a small or negligible difference in the element is detected between the data frame from the map and the corresponding data frame from the sensor dataset. The system 200 may express the difference as an absolute value (e.g., value A of the element based on the data frame from the map minor value B of the element based on the data frame from the sensor dataset), a ratio (e.g., the ratio of value A to value B), a percentage (e.g., a percentage of the difference expressed in the absolute value to a reference value in which the reference value may be value A, value B, or a different value). The system 200 may determine a frame confidence level based on the scores. For example, the system 200 may sum up the scores and designate the sum as the frame confidence level. As another example, the system 200 may determine a weighted sum of the scores by assigning different weights to the scores corresponding to different elements of the road, and designate the weighted sum as the frame confidence level. As a further example, the system may designate an average or a weighted average of the scores as the frame confidence level. The system 200 may assign a weight to each of the elements based on one or more factors that relate to, e.g., a potential impact of the element on safety of autonomous driving. For example, the system 200 may assign a first weight to the score for the road marker, a second weight to the score for curvature, and a third weight to the score for the road shape, in which the first weight is higher than the second weight and the second weight is higher than the third weight. In some embodiments, the system 200 may normalize the raw value of the calculation (e.g., the sum, the weighted sum, the average, the weighted average) to provide the frame confidence level. Merely by way of example, the frame confidence level may be a value in the range between 0 and 1.

The system 200 may get a unit confidence level based on the frame confidence levels determined based on the data frames corresponding to the road unit. For example, the system 200 may sum up the frame confidence levels and designate the sum as the unit confidence level. As another example, the system 200 may determine a weighted sum of the frame confidence levels by assigning different weights to the frame confidence levels corresponding to different portions of the road unit, and designate the weighted sum as the unit confidence level. As a further example, the system may designate an average or a weighted average of the frame confidence levels as the unit confidence level. The system 200 may assign a weight to each of the unit confidence levels based on one or more factors that relate to, e.g., a potential impact of the portion of the road (e.g., one or more characteristics of the portion of the road) on safety of autonomous driving. For example, such factors may include the curvature, lane width, road surface condition, etc., of a portion of the road. In some embodiments, the system 200 may normalize the raw value of the calculation (e.g., the sum, the weighted sum, the average, the weighted average) to provide the unit confidence level. Merely by way of example, the unit confidence level may be a value in the range between 0 and 1.

In some embodiments, the system 200 may determine multiple road segments based on the unit confidence levels of the road units. In some embodiments, to obtain a road segment, the system 200 may merge two or more neighboring road units based on a merger condition relating to the unit confidence levels thereof. As used herein, two road units are considered neighboring to each other if there is no other road unit in between. In some embodiments, the merger condition may include that the unit confidence levels of at least two neighboring road units are close to each other such that the difference between the unit confidence levels is below a difference threshold. In some embodiments, the merger condition may include that the unit confidence levels of at least two neighboring road units fall within a same confidence level range. The system 200 may determine the merger condition for merging at least two neighboring road units based on, e.g., a default setting, an instruction provided by an operator, a setting the system 200 selected based on a rule and the specific elements of a road. For example, the system 200 may determine, based on an instruction from an operator, that the unit confidence levels are grouped into five groups, the first group in the range from 0 to 0.2, the second group in the range from 0.21 to 0.4, the third group in the range from 0.41 to 0.6, the fourth group in the range from 0.61 to 0.8, and the fifth group in the range from 0.81 and above. If the confidence levels of at least two neighboring road units fall within a same range of one of the five groups, the system 200 may merge the at least two neighboring road units into one road segment.

The system 200 may determine a segment confidence level of the road segment based on the unit confidence levels of the road units. For example, the system 200 may sum up the unit confidence levels and designate the sum as the segment confidence level. As another example, the system 200 may determine a weighted sum of the unit confidence levels by assigning different weights to the unit confidence levels corresponding to different road units of the road, and designate the weighted sum as the segment confidence level. As a further example, the system may designate an average or a weighted average of the unit confidence levels as the segment confidence level. The system 200 may assign a weight to each of the unit confidence levels based on one or more factors that relate to, e.g., a potential impact of the road unit (e.g., one or more characteristics of the road unit) on safety of autonomous driving. For example, such factors may include the curvature, lane width, road surface condition, etc., of the road unit. In some embodiments, the system 200 may normalize the raw value of the calculation (e.g., the sum, the weighted sum, the average, the weighted average) to provide the frame confidence level. Merely by way of example, the frame confidence level may be a value in the range between 0 and 1. In some embodiments, the system 200 may merge the data frames of the at least two neighboring road units of a road segment into a data bag corresponding to the road segment. In some embodiments, the system 200 may obtain multiple data bags, each of which may correspond to a road segment and be obtained by merging the data frames of the at least two neighboring road units of the road segment.

In some embodiments, neighboring road segments may fail to satisfy the merger condition. As used herein, two road segments are considered neighboring to each other if there is no other road segment in between. For example, the segment confidence levels of two neighboring road segments may fall outside a confidence level range. As another example, the difference between the segment confidence levels of two neighboring road segments may exceed a difference threshold.

Returning to FIG. 4, at 406, the system 200 may compare the confidence level with a confidence threshold and, process the map based on whether the confidence level exceeds the confidence threshold. In some embodiments, the system 200 may perform 406 on the basis of the road units or on the basis of the road segments. For example, the system 200 may compare each of multiple unit confidence levels with the confidence threshold and process road units of the map accordingly. As another example, the system 200 may compare each of multiple segment confidence levels with the confidence threshold and process road segments of the map accordingly.

Merely by way of example with reference to the embodiments in which the system 200 perform 406 on the basis of the road segments, if the system 200 determines that none of the segment confidence levels of the road exceeds the confidence threshold, the system 200 may determine that no further processing is needed until new sensor dataset is available, and therefore the process 400 may return to 402.

If the system 200 determines that at least one of the segment confidence levels of the road exceeds the confidence threshold, the system 200 may proceed further. In some embodiments, the system 200 may generate a notification to an operator indicating that the confidence level exceeds the confidence threshold at 408. For example, the notification may indicate that at least one segment confidence level exceeds the confidence threshold. As another example, the notification may indicate that which road segment(s) (e.g., location of the road segment(s)) whose segment confidence level(s) exceed(s) the confidence threshold. The system 200 may transmit the notification to the operator via the transmitter 215. The system 200 may cause the notification to be presented on a user interface (e.g., a graphic user interface). The system 200 may invite the operator to review the sensor dataset or the comparison between the map and the sensor dataset.

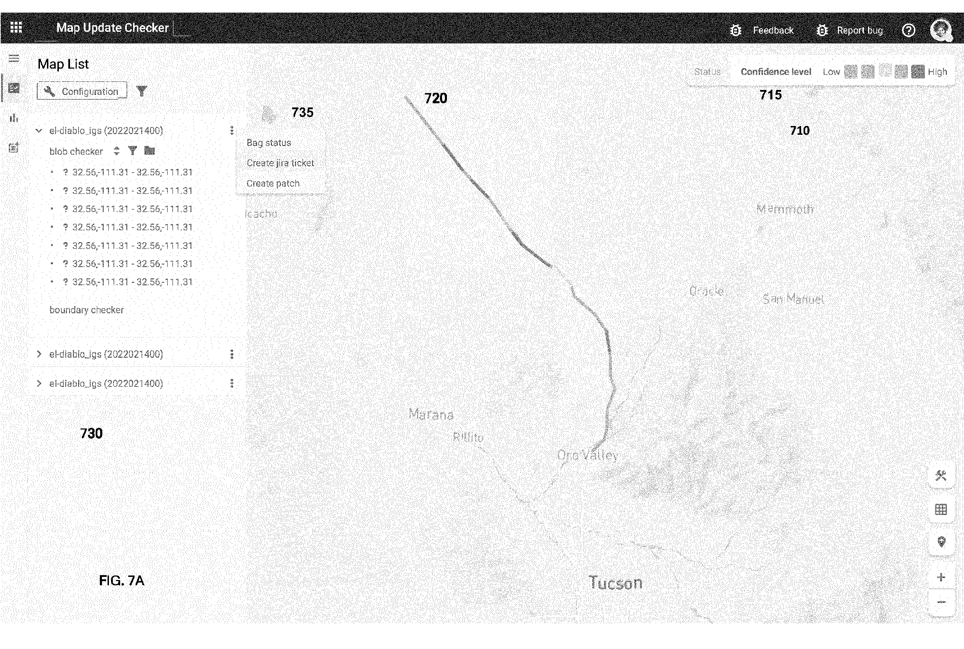

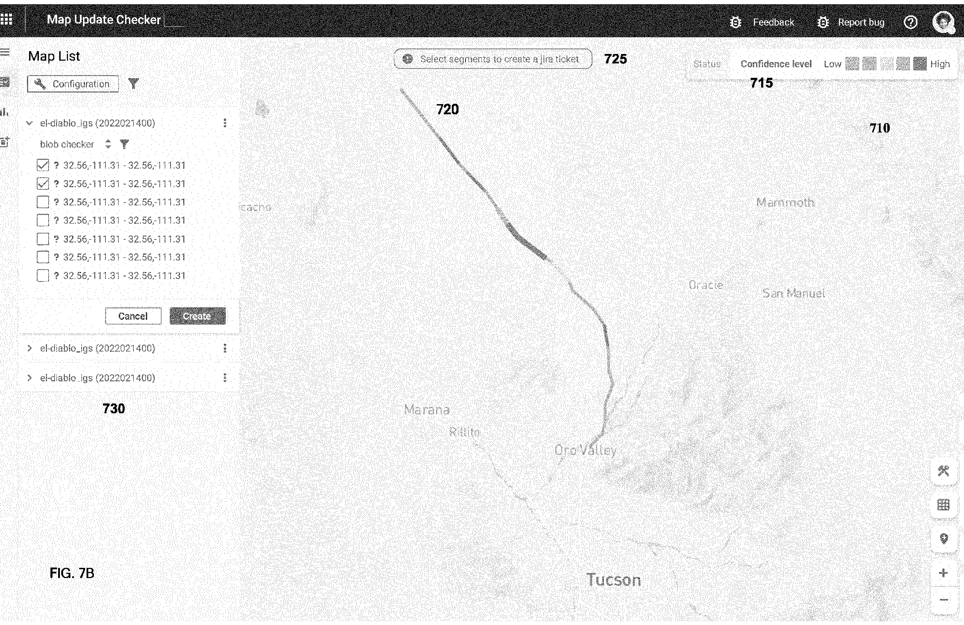

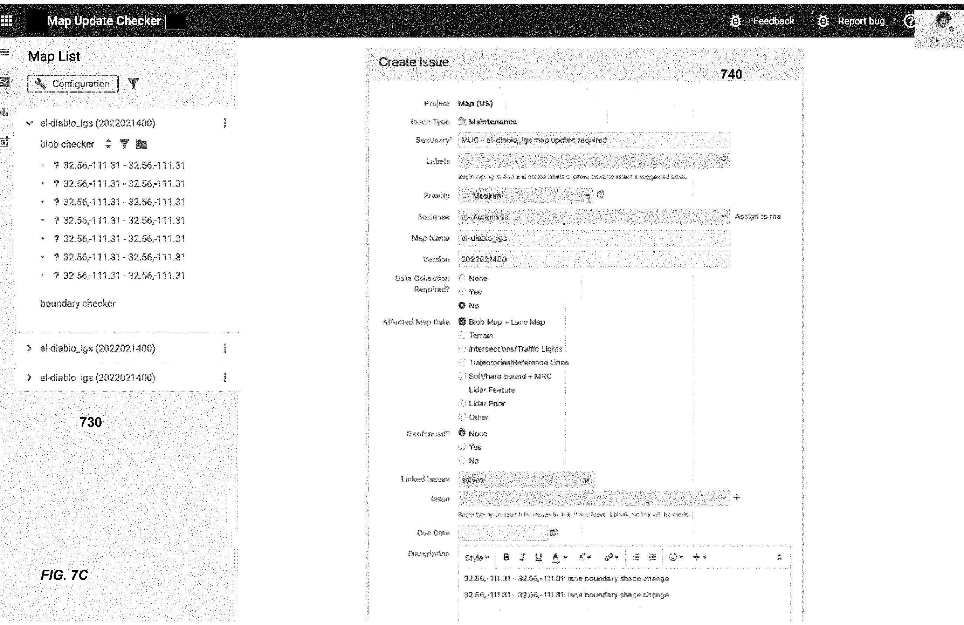

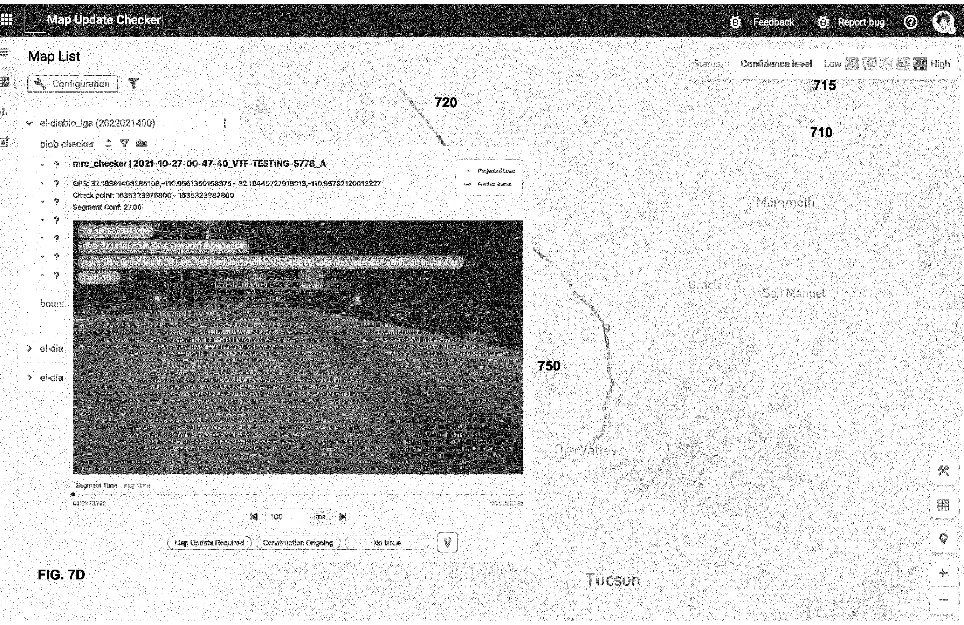

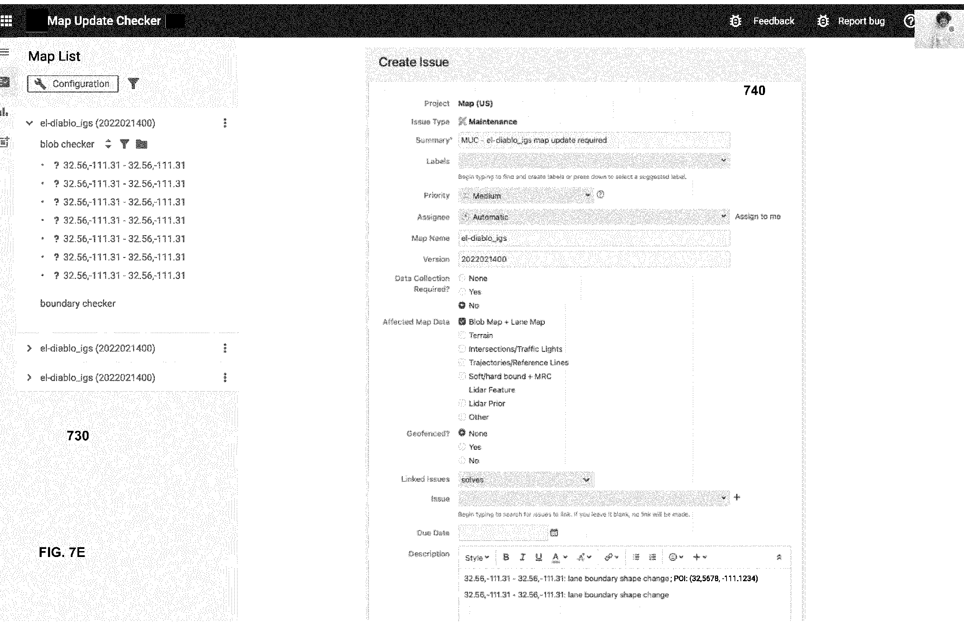

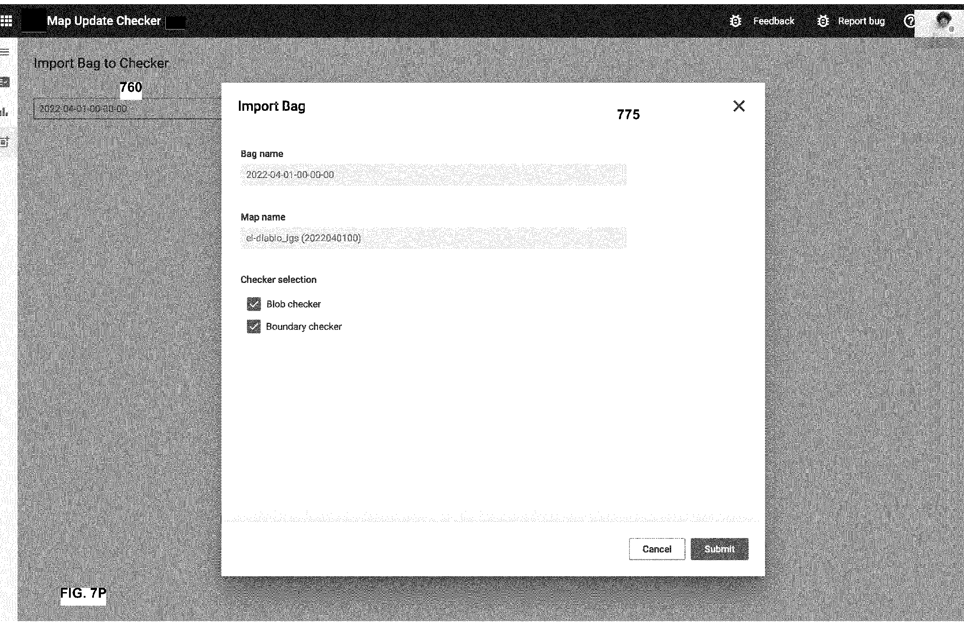

For instance, the system 200 may cause road segments of the road to be displayed on the user interface. The system 200 may cause different road segments to be denoted differently using, e.g., different line types, different colors, or the like, or a combination thereof. See, e.g., FIGs. 7B, 7D, and 7E. Merely by way of example, a darker line color may indicate a higher segment confidence level; a lighter line color may indicate a lower segment confidence level. As another example, the system 200 may cause icons associated with the information associated with the road segments to be displayed on the user interface to facilitate the review by the operator. An icon may show the identification of the road segment including, e.g., the location, the acquisition time, etc., of the information of a road segment. The operator may retrieve relevant information (e.g., a data bag (or referred to as a data frame) corresponding to the road segment) by operating (e.g., clicking) the icon. See, e.g., the list of icons in the panel on the left hand side of each of FIGs. 7A through 7E. On the user interface, the status of a road segment may be displayed. Example statuses of a road segment may include approved, unverified, to be fixed, etc. See, e.g., FIG. 7E. In some embodiments, the map displayed on the user interface may be interactive. For example, the operator may specify a road segment to review by placing a cursor on the road segment on the map displayed on the user interface. See, e.g., the car icon specifying a road segment on the map displayed on the user interface as illustrated in FIG. 7C.

The user interface may allow the operator to input an instruction regarding map maintenance. For example, the operator instruction may indicate that no need to update the map, or a portion thereof. As another example, the operator instruction may indicate that the map, or a portion thereof (e.g., a road segment of a map), needs to be updated. The system may receive the operator instruction at 410. If the system 200 determines at 412, based on the operator instruction received at 410, that the map, or a portion thereof, needs to be updated, the system 200 may update the map at 414. In some embodiments, at 414 the system 200 may update the map, or a portion thereof, based on the sensor dataset. For example, the system 200 may replace or overwrite the map, or a portion thereof, with a map, or a portion thereof, generated based on the sensor dataset. If the system 200 determines at 412, based on the operator instruction, that the map does not need to be updated, the system 200 may determine that no further processing is needed until new sensor dataset is available, and therefore the process 400 may return to 402.

In some embodiments, if the system 200 determines that at least one of the segment confidence levels of the road exceeds the confidence threshold, the system 200 may automatically proceed to 412 without seeking an instruction from any operator. At 412, the system 200 may determine whether to update the map based on, e.g., additional information and/or a different model than that used in determining the confidence level involved in 406. If the system 200 determines at 412 that the map, or a portion thereof, needs to be updated, the system 200 may update the map at 414. In some embodiments, at 414 the system 200 may update the map, or a portion thereof, based on the sensor dataset as described elsewhere in the present disclosure. If the system 200 determines at 412 that the map does not need to be updated, the system 200 may determine that no further processing is needed until new sensor dataset is available, and therefore the process 400 may return to 402. The system 200 may generate a notification to an operator indicating that the confidence level exceeds the confidence threshold and/or that the map, or a portion thereof, has been updated or not.

In some embodiments, if the system 200 determines that at least one of the segment confidence levels of the road exceeds the confidence threshold, the system 200 may automatically proceed to 414 without seeking an instruction from any operator. In some embodiments, at 414 the system 200 may update the map, or a portion thereof, based on the sensor dataset as described elsewhere in the present disclosure. The system 200 may generate a notification to an operator indicating that the confidence level exceeds the confidence threshold and/or that the map, or a portion thereof, has been updated or not.

In some embodiments, the system 200 may store the processed (updated or not) map as an electronic file in an electronic storage device. The processed map may be used to guide an autonomous vehicle to operate on the road.

In some embodiments, the system 200, after updating the map, may transmit the updated map to one or more target users among candidate users. Such target users and candidate users may include autonomous vehicles. For example, the system 200 may obtain a trajectory on which each of a plurality of candidate users is operating or is expected to drive; the system 200 may identify, based on the trajectories, from the plurality of candidate users, one or more target users each of which is within a range from the road corresponding to the updated map and moves toward the road. The system 200 may transmit the updated map to the target user(s) so that the operation thereof may be based on the updated map. In some embodiments, the system 200 may transmit a notification to the target user(s) to notify the target user(s) the existence of the updated map and/or invite the target user(s) to accept the updated map. In some embodiments, the updated map may be installed on a vehicle as part of the routine map update process.

The system 200 may apply one or more machine learning models for at least a portion of the process 400. For example, the system 200 may register data of a road acquired by sensors of different types during a same trip using a machine learning model. As another example, the system 200 may recognize information of a moving object from the sensor dataset using a machine learning model. As a further example, the system 200 may perform 404 and 406 using a first machine learning model, and perform 412 and/or 414 using a second machine learning model.

As noted above, the processed map may be used to guide an autonomous vehicle to operate on the road. For example, after the map has been updated at 414 and stored as an electronic file, the map can be used to guide an autonomous vehicle to operate on the road. Control of the autonomous vehicle can be affected by any of the components, systems and methos described herein, for example those described above with respect to the example vehicle ecosystem for autonomous driving. For example, the vehicle control subsystems 146 can be used to control the vehicle based on the updated map. In some implementations, the navigation unit may be configured to incorporate data from the updated map so as to determine a driving path for the vehicle. In general, the autonomous control unit may be configured to control the vehicle to travel along the determined driving path for the vehicle, either without a driver or to provide driver assistance in controlling the vehicle.

FIG. 6 shows an example workflow for map maintenance according to some embodiments of the present disclosure. In the example workflow 600, a database 602 may store sensor datasets. A sensor dataset 604 may include data acquired using one or more of a LiDAR sensor, a camera, a Novatel sensor, a localization sensor. A Novatel sensor may acquire geospatial information using a sensor implemented on a moving platform (e.g., a vehicle). A localization sensor may include, e.g., a GPS device. The workflow may initiate when a new sensor dataset becomes available for comparison with active maps (denoted as tsmaps 606 in FIG. 6). The active tsmaps 606 may be stored in the form of data units (or referred to as blobs in FIG. 6 including, e.g., a dashed line blob 608 (a data unit corresponding to the road object of a dashed line), a solid line blob 610 (a data unit corresponding to the road object of a solid line). A processor (e.g., a processor 210 of the system 200) may project the dashed line blob 608 and the solid line blob 610 to a camera view at 612. The sensor dataset 604 and an active tsmap 606 that include information of a same road may be compared. In some embodiments, as a preprocessing operation, at 614 the processor may exclude a blob that at least partially overlaps with a detection mask (and therefore at least partially occluded or not sufficiently detected as described elsewhere in the present disclosure), or a blob outside the current scope of the comparison (e.g., corresponding to a portion of the road whose information is recorded in one of the sensor dataset or the map but not the other) of comparison. Then at 618 the processor may calculate a total confidence level based on one or more of the following inquiries: (1) whether there are disconnected lines in the image portion of the dataset 604 acquired using a camera, (2) whether there are continuously missing dashed lines, (3) the percentage of the area in a lane mask, (4) based on data acquired by one or more LiDAR sensors, whether a road pattern has changed, and (5) whether there is any other change based on data acquired or obtained in other modules. In some embodiments, the processor may involve at least one of the features to assess whether there is any change on the road. In some embodiments, the processor may involve at least one of the inquiries (e.g., inquiries (1) and (2)) to assess whether the sensor dataset is reliable or if there is any issue in the data acquisition using the sensors. At 620 the processor may determine whether the confidence level so determined exceeds a preset standard (e.g., a confidence threshold as described elsewhere in the present disclosure).

If the processor determines that the confidence level does not exceed the preset standard, the processor may determine that no further operations are needed until a new sensor dataset becomes available in 602. If the processor determines that the confidence level does not exceed the preset standard, the processor may determine that further processing is needed. In this example workflow, the processor may seek an input from an operator to proceed further. The processor may at 622 cause a result list to be transmitted to a frontend at 622 and at 624 cause the map to be presented on a display, e.g., on a graphic user interface. On the user interface, a road or route may be displayed on the map to illustrate information including, e.g., location, orientation, etc., of the road or route. At 626, the processor may transmit a notification to a user (e.g., an operator, a member of a map team) via a map bot. At 628, the user may enter a Map Update Tool via, e.g., a cloud service.

In some embodiments, every offloaded sensor dataset may be checked, e.g., using the Map Update Tool, and be assigned a confidence level for each road segment. For a road segment, the confidence level from each check may be accumulated; an accumulated confidence level may be regarded as "voting by multiple times observation of sensor datasets" to determine whether an update is needed for the road segment, which can help to rule out wrong conclusions drew from a single observation recorded in the sensor dataset acquired in one check.

FIGs. 7A-7Q illustrate examples of a user graphic interface of a Map Update Tool according to some embodiments of the present disclosure. FIG. 7A shows an example landing page of an example Map Update Tool. In some embodiments, the Map Update Tool may present, to the user via a graphic user interface, the map 710 including the road of interest 720 (whose information is recorded in the sensor dataset 604 and the active tsmaps 606 (including, e.g., the dashed line blob 608 and the solid line blob 610 projected to a camera view at 612). The Map Update Tool may also present, to the user via the graphic user interface, information of the map including the road of interest. For example, the Map Update Tool may present icons (e.g., icons in an area 730) each of which is associated with a data bag corresponding to a road segment, or a set of data bags acquired substantially at a same time (e.g., during a same trip) collectively recording the condition of the road at that time as described elsewhere in the present disclosure. An icon corresponding to the road 720 or a road segment of the road 720 may be denoted with identification information including, e.g., acquisition time of data corresponding to the road or road segment, location of the road segment, information of the map including the road or road segment, etc. Information of a road segment acquired at an acquisition time may be stored in a data bag. Data bags of the road segments of the road 720 may be grouped based on the acquisition times. For example, the user may select information of the road 720 acquired on a specific date for review/processing by operating on a suitable icon (e.g., clicking the icon) identified by the acquisition date in the area 730. As another example, the user may select a road segment of the road 720 acquired on a specific date for review/processing by operating on a suitable icon (e.g., clicking the icon) identified by the location information in the area 730. The road shown in the graphic user interface may be interactive so that when the user puts the cursor over a road segment of the road represented on the graphic user interface, information of the road segment (e.g., acquisition time of data corresponding to the road segment, location of the road segment, information of the map including the road or road segment, icon(s) associated with additional information of the road segment) may be activated or shown. The user may access such information to facilitate the review. The graphic user interface may further include a status bar 715. In some embodiments, the status bar 715 may include information, e.g., a (continuous or discrete) color or grey scale/ramp that show correspondence between the color or grey scale and the confidence levels of the road segments.

At 630, the processor may receive an input from the user based on a manual verification performed by the user (e.g., a member from the map team). At 632, the processor may determine whether to update the map based on the received input. If the processor determines that the map does not need to be updated, the processor may deem that the verification is completed at 634. If the processor determines that the map needs to be updated, at 636 the processor may proceed with the map updating or generate/export an encoded file for the map update. In some embodiments, the map update may be performed by patching/updating a portion of the map, e.g., one or more road segments of the road 720 as illustrated in FIGs. 7A so that the map maintenance is completed at 638. The updated map may be stored as an active tsmap in 606.

It is understood that the example workflow 600 is provided for illustration purposes and not intended to be limiting. For example, the processor may omit the operations of requesting a user to manually verify or decide whether to update the map. Instead, the processor may determine how to proceed in response to determining that the confidence level exceeds a preset standard.

With reference to the example workflow 600, Table 1 below provides example product features of a map maintenance system.

| **Feature** | **Description** | **Priority** |
|---|---|---|
| Load map update checker results to front end | Automatically feed new datasets to map checker to compare with active tsmaps | P1 |
| | load road change results | P0 |

| | | |
|---|---|---|
| | load road object checking results | P0 |
| | load tsmap and bag/segments | P0 |
| Users enter map update tool and view result list | When there is an update to result list, users can receive map_bot notification | P2 |
| | Users can find 'Map Update Tool' with an independent tool access or create docker via a cloud service | P0 |
| Map check result list | When enter the tool, there is a list of results sorted by | P0 |
| | - map name | |
| | - type of road work | |
| | - segment (start/end timestamps) | |
| | - bag name | |
| | On 'map name', an info icon to show | P0 |
| | - map start/end GPS coordinates | |
| | - status icon (overall status) | |
| | On 'type of road work', there are different type of results | P0 |
| | - map Omission | |
| | - road construction | |
| | - dash line repaint | |
| | - solid line became dash line | |
| | - dash line became solid line | |
| | segment' shows the road segments under each map that need verification with status icons. The name format of a segment is the start/end timestamps. | P0 |
| | under 'segment' is the 'bag names' that are available for review | P0 |

| | | |
|---|---|---|
| Result list sorting/filtering | In each map. the segment/bag is sorted by latest update to oldest by default | P2 |
| | filter by status: unverified/no issue/map update required/fixing/fixed | P3 |
| | filter by confidence level: (0-0.2)(0.21-0.4)(0.41-0.6)(0.61-0.8)(0.81 and above) | P3 |
| | sort by confidence level | P4 |
| Visualize route on map | When click on 'map name', map route is visualized on map view | P0 |
| | There is a option to highlight each segment on a map (bold or status color) | P1 |
| | when hover over a segment, the segment is highlighted on the map | P3 |
| | when hover over a segment on the map, it is highlighted on the list | P3 |
| | when the confidence level is higher for a segment, the color is darker | P3 |
| | there is an option to visualize all segments by status or by only confidence level | P3 |
| Verify results | When click on a bag, a verification window pops out with camera view | P0 |
| | When a bag is selected, there will be a checkpoint (timestamps for a segment) for the user to verify if map update required or not | P0 |
| | - checkpoint is highlighted with different color | |

| | | |
|---|---|---|
| | - 2 buttons pop up: map update required/no map update required | |
| | tsmap road object is projected on the camera view | P0 |
| | On top of the verification window shows bag name/type of road work/current timestamp/current GPS/checkpoint GPS/checkpoint timestamps/detect issues(top 2) | P2 |
| Progress bar | there is a progress bar to control camera view (video) | P0 |
| | user can set preferred interval timeframes on the progress bar | P3 |
| | current timestamp is shown when hover on the progress dot | P2 |
| | When a bag is selected, the video clip plays from the target checkpoint (timestamps for a segment), but users can view the entire bag video by controlling the progress bar. | P2 |

In Table 1, the priority information in the third column indicates the urgency to fix the corresponding issues. For example, P0, P1, P2, and P3 may indicate decreasing priorities; a feature with a high priority may need to be addressed more quickly than a feature with a low priority.

FIGs. 7A-7Q show example user interface pages of a map update tool according to some embodiments of the present disclosure. FIG. 7A shows an example user interface page of the map update tool, referred to as "Map Update Checker" as illustrated. A map list shows on the left hand side of the page in area 730. The map list may include a plurality of maps of different areas. The map list may include a plurality of maps of a same area (e.g., including a same road) acquired at different acquisition times. As illustrated, the map list may include icons corresponding to maps 710 acquired at different acquisition times, each of which includes a same road 720. The different icons corresponding to the maps 710 may be identified using, e.g., acquisition times. The map list may include a plurality of icons corresponding to different road segments of the road 720 for a map 710; the plurality of icons may be identified using, e.g., location information of the road segments. A road on a map or a road segment of a road may be selected by clicking the corresponding icon. The user interface may show information or operations at 735 available for a road segment of the road 720 in the map 710 when the road segment is selected. Examples of information or options available may include "Bag status" (e.g., indicating the status of the road segment), "Create jira ticket" (allowing submission of a request to update the map), and "Create patch" (allowing submission of a request to create a patch regarding a road segment). Examples of bag status may include approved/no issue, unverified, to be fixed, fixed, under fixing/being fixed, etc. The user interface may further include a status bar 715. In some embodiments, the status bar 715 may include information, e.g., a (continuous or discrete) color or grey scale/ramp that show correspondence between the color or grey scale and the confidence levels of the road segments. As illustrated, different road segments of the road 720 have different gray levels, indicating different confidence levels. As described elsewhere in the present disclosure, a confidence level may predict the likelihood that a map, or a portion thereof (e.g., a road segment of a road in the map) needs to be updated.

FIG. 7B shows that two road segments are selected (as indicated in 730) for creating a jira ticket (as indicated in 725) for map update. FIGs. 7C and 7E provide example user interface pages showing in 740 information and issues regarding the two selected road segments in connection with the applicable map update. FIG. 7D provides an example user interface page showing in window 750 an image of a road segment and relevant information. The user interface page may include multiple windows. The windows may overlay or not. For example, the window 750 may overlay the map 710 and/or the area 730. FIG. 7E provides an example user interface page showing in 740 information and issues regarding the two selected road segments in connection with the applicable map update.

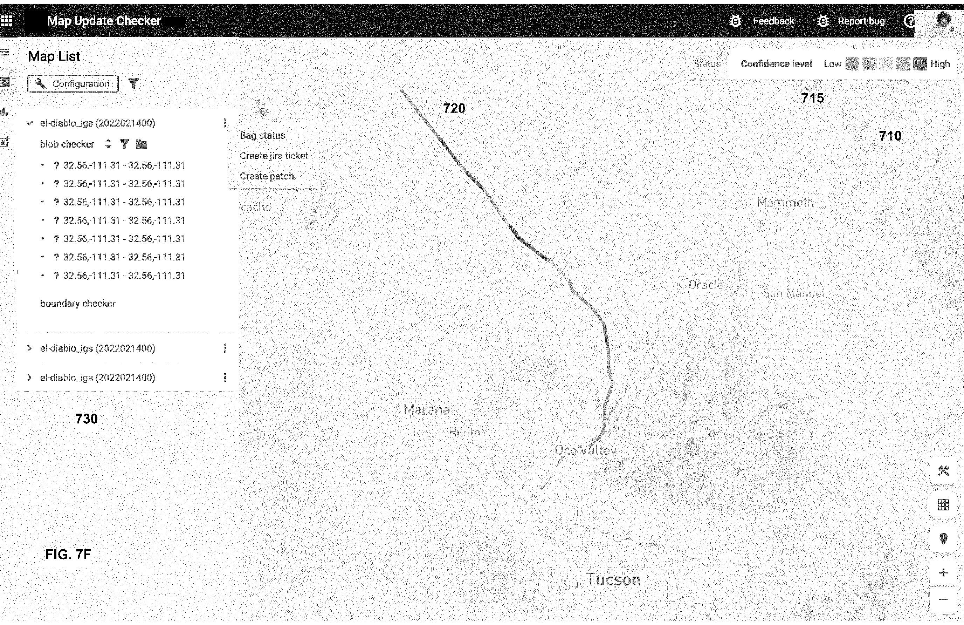

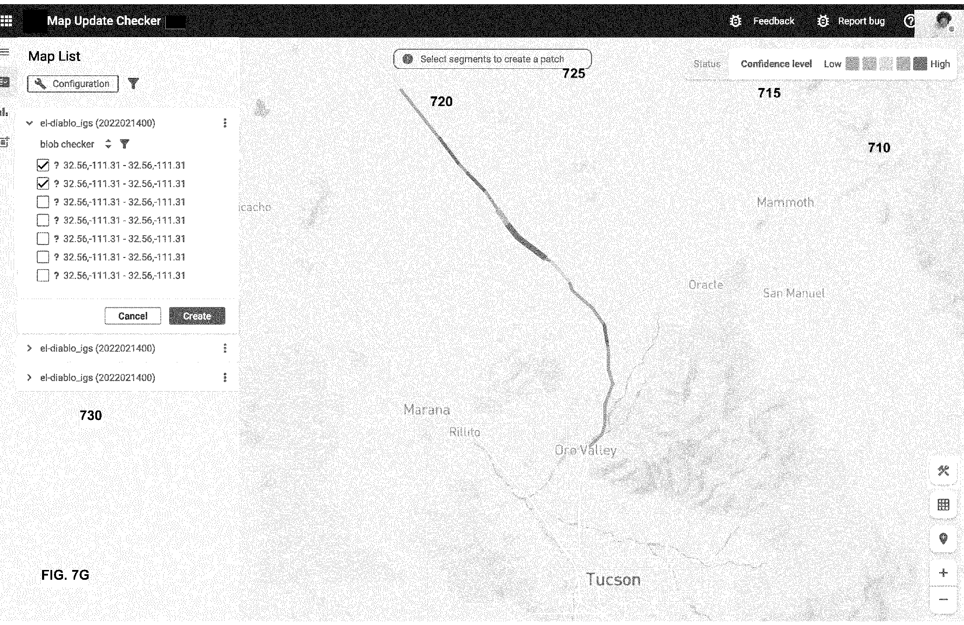

FIG. 7F is similar to FIG. 7A, the description of which is not repeated here. FIG. 7G is similar to FIG. 7B, except that two road segments are selected for creating a patch (as indicated in 725).

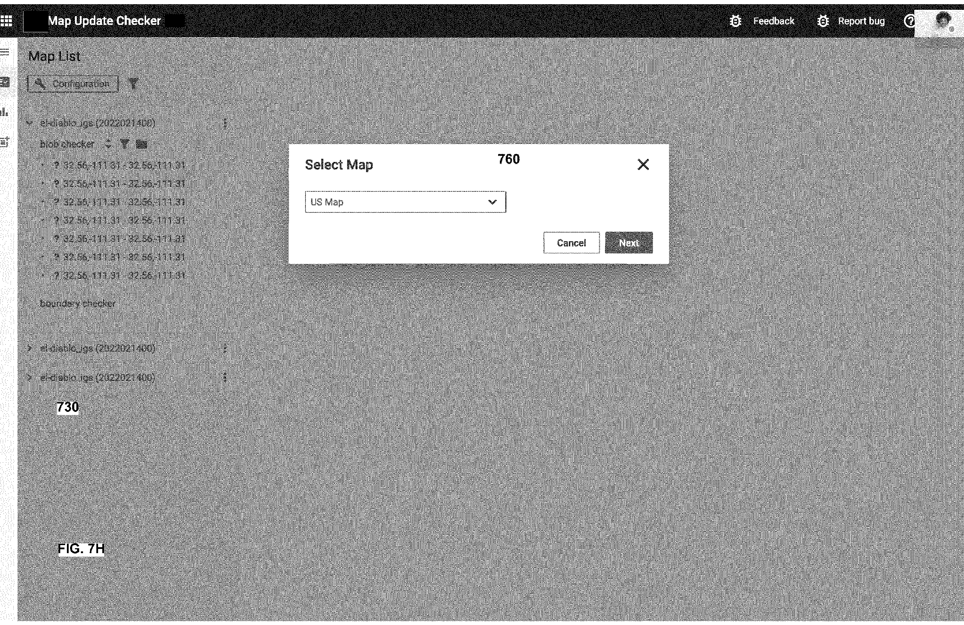

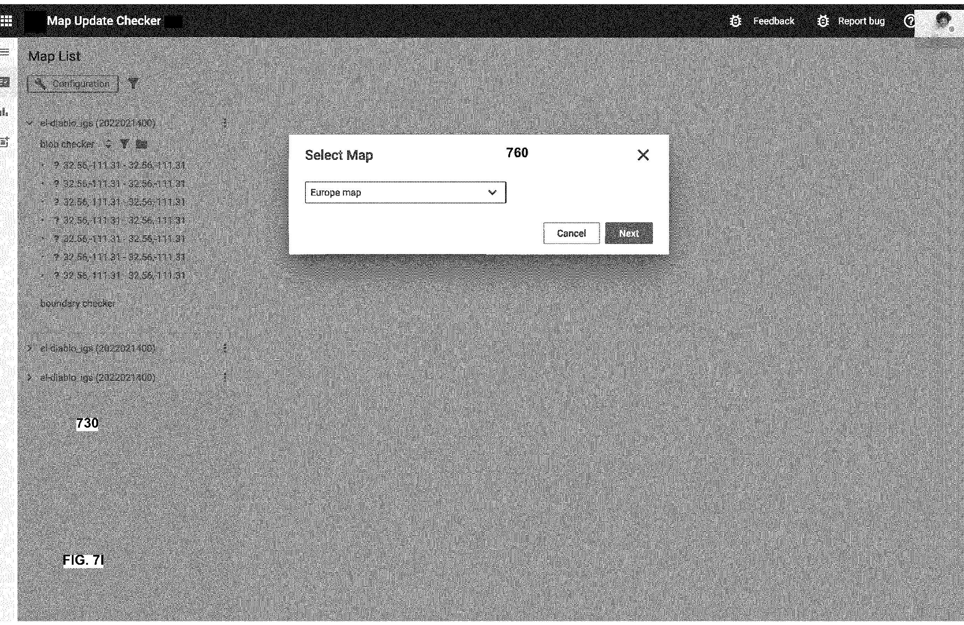

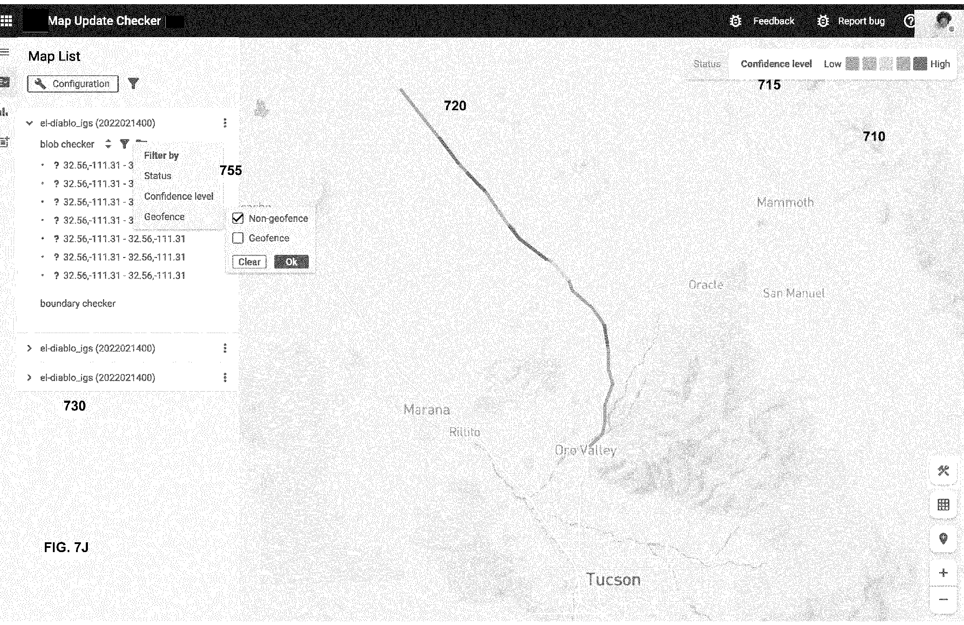

FIGs. 7H and 7I provide example user interface pages showing in 760 maps of different countries or regions may be selected. FIG. 7J provides an example user interface page showing in 755 filter options configured to facilitate a map search.

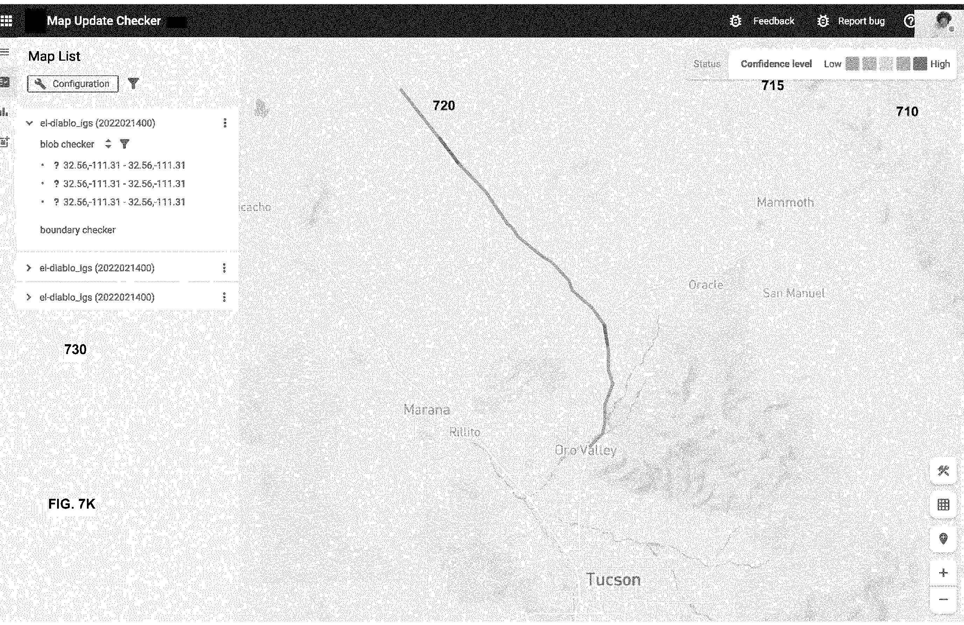

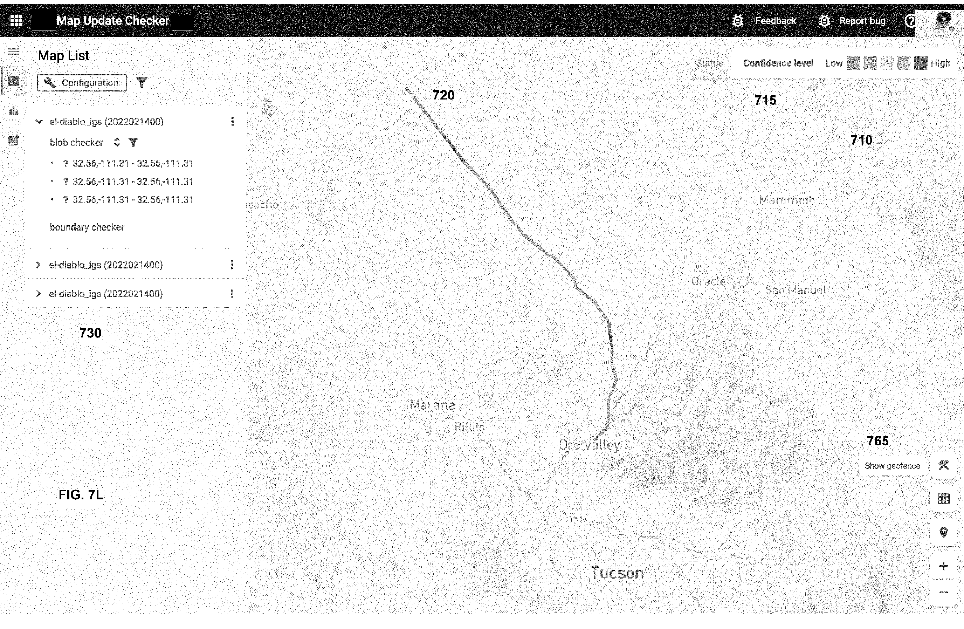

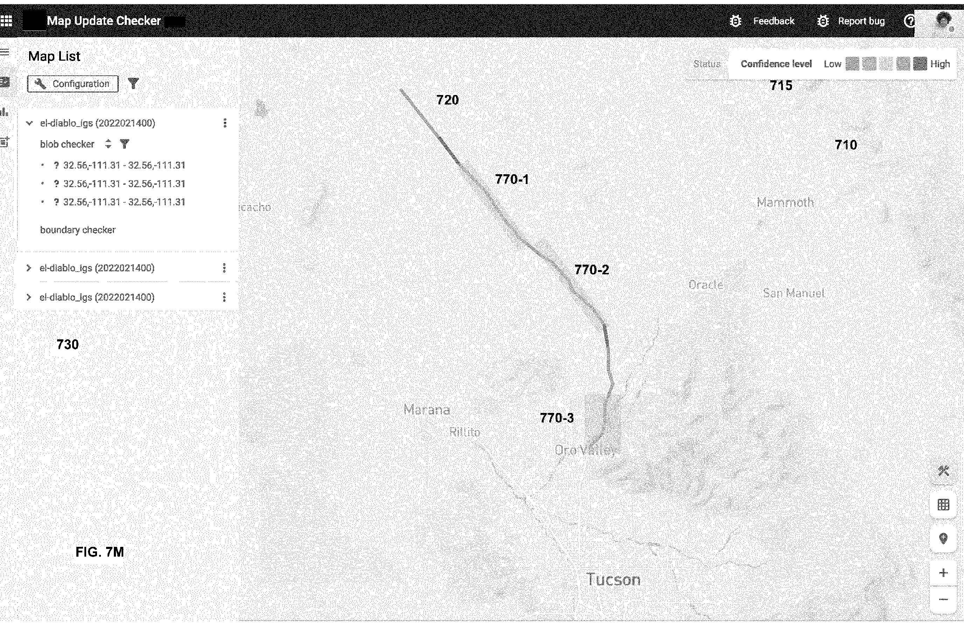

FIG. 7K is similar to FIG. 7A, the description of which is not repeated here. FIG. 7L provides an example user interface page showing that the view of the map 710 may be modified, e.g., by superimposing one or more geofences as specified in 765. FIG. 7M shows a modified view of the map 710 in which three geofences 770-1, 770-2, and 770-3 are superimposed on the road 720.

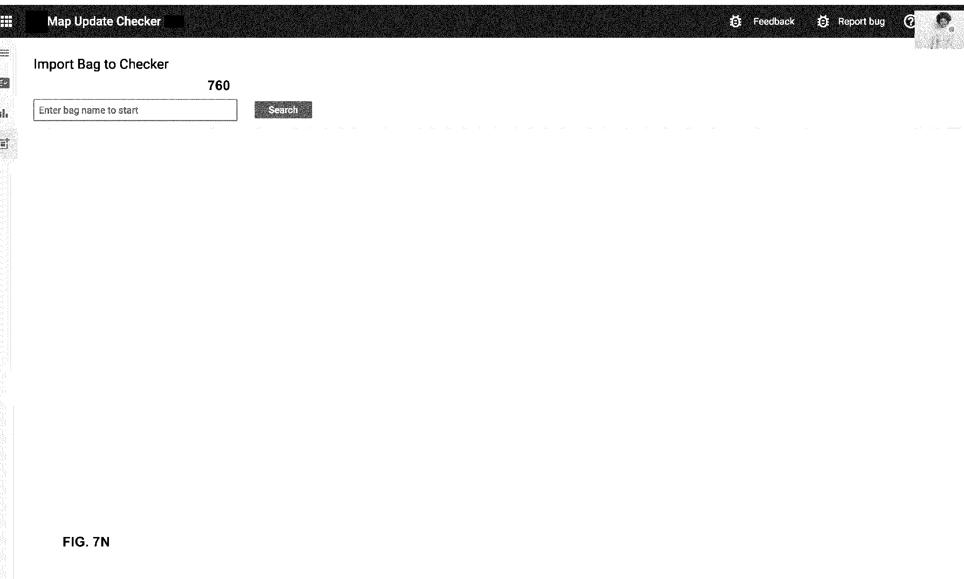

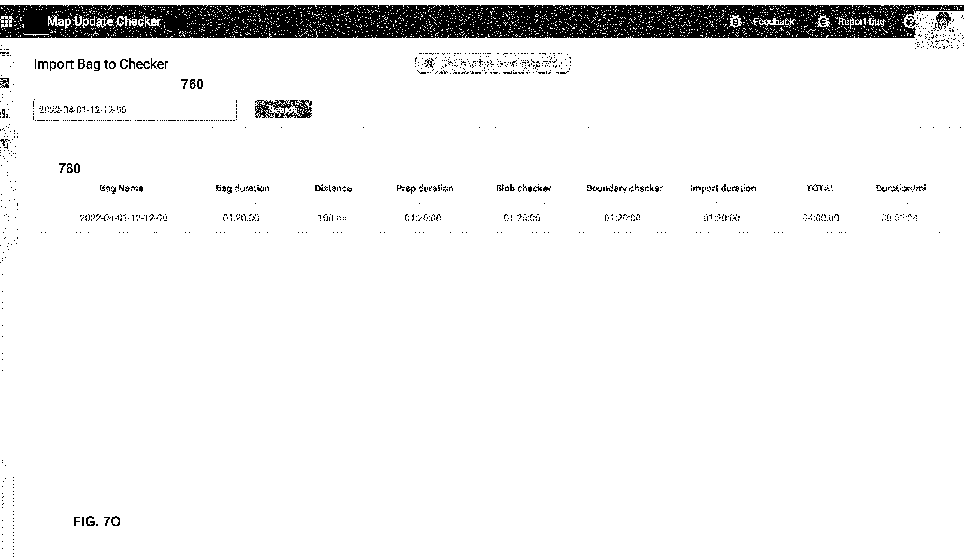

FIG. 7N provides an example user interface page showing that a road segment or a corresponding data bag may be identified by a user providing a search query in 760. FIG. 7O provides an example user interface page showing that based on a search query in 760 a road segment is identified and relevant information shown in 780.

7P provides an example user interface page showing that a road segment or a corresponding data bag may be identified by a user providing a multi-factor search query in 775.

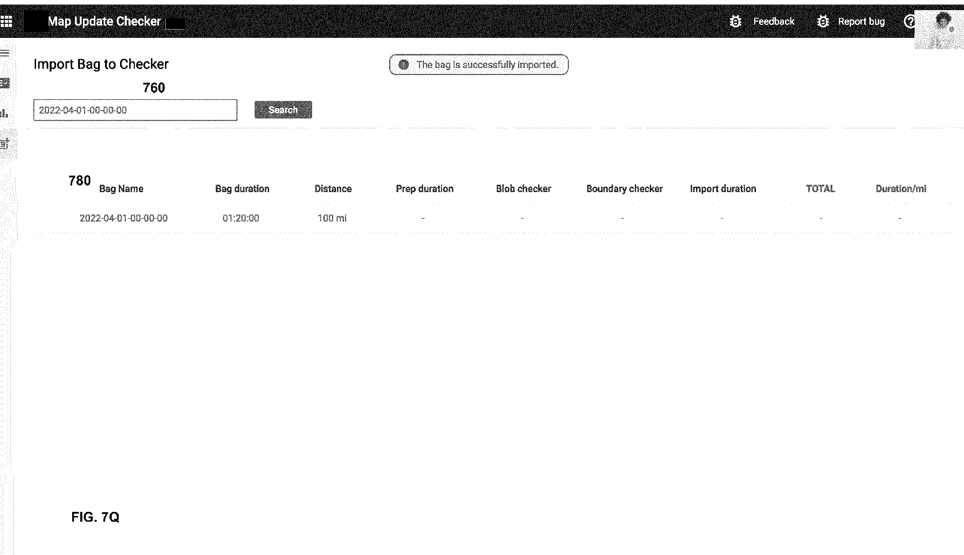

FIG. 7Q provides an example user interface page showing that based on multi-factor search query in 775 a road segment is identified and relevant information shown in 780.

It is understood that the example user interface pages in FIGs. 7A-7Q are provided for illustration purposes only. In some embodiments, at least a portion of the operations associated with the example user interface pages illustrated in FIGs. 7A-7Q are performed without user input or intervention. For example, the system 200 may identify road segments that need to be updated and perform the update based on a sensor dataset without user intervention.

Appendix A provides example product details for an example map maintenance system.

Some example technical solutions are implemented as described below.
1. A method of maintaining a map, comprising: receiving a sensor dataset acquired by a sensor subsystem, wherein: the sensor dataset includes information about a road, the sensor subsystem comprises multiple different types of sensors including at least one of a camera, a light detection and ranging (LiDAR) sensor, a positioning sensor, a radar sensor, or a mapping sensor, and the sensor dataset has a first spatial accuracy level of 50 centimeters or lower; determining, by a processor, a confidence level by comparing the sensor dataset and the map that includes prior information about the road, wherein the map has a second spatial accuracy level of 50 centimeters or lower; in response to determining that the confidence level exceeds a confidence threshold, processing the map by the processor; and storing the processed map as an electronic file, wherein the processed map is configured to guide an autonomous vehicle to operate on the road.
2. The method of any one or more of the solutions herein, further comprising: in response to determining that the confidence level exceeds the confidence threshold, causing a notification to be transmitted to an operator; and receiving an input from the operator indicating at least one of: maintaining the map, or updating the map based on the sensor dataset; and the processing the map comprises processing the map according to the input.
3. The method of any one or more of the solutions herein, wherein the processing the map comprises updating the map based on the sensor dataset.
4. The method of any one or more of the solutions herein, wherein: the road comprises a first plurality of road units; the sensor dataset comprises a second plurality of data frames each of which corresponds to a portion of the road represented in the data frame; and each of the first plurality of road units corresponds to multiple data frames of the sensor dataset.
5. The method of any one or more of the solutions herein, wherein the comparing the sensor dataset and the map comprises: for each of the first plurality of road units, determining a unit confidence level.
6. The method of any one or more of the solutions herein, wherein: the determining that the confidence level exceeds a threshold comprises determining that a unit confidence level of each of at least one of the first plurality of road units exceeds the confidence threshold, and the processing the map comprises: for each of the at least one road unit whose unit confidence level exceeds the confidence threshold, updating, based on multiple data frames of the sensor dataset of the road unit, a portion of the map that corresponds to the road unit.
7. The method of any one or more of the solutions herein, wherein the determining the unit confidence level for a road unit comprises: for each of the multiple data frames corresponding to the road unit, identifying a corresponding portion of the map based on position information of the portion of the road represented in the data frame; and determining a frame confidence level by comparing the data frame with the corresponding portion of the map, and determining the unit confidence level of the road unit based on the multiple frame confidence levels.
8. The method of any one or more of the solutions herein, wherein the determining the unit confidence level of the road unit based on the multiple frame confidence levels comprises: designating a sum of the multiple frame confidence levels as the unit confidence level of the road unit.
9. The method of any one or more of the solutions herein, further comprising: identifying at least two neighboring road units along the road that satisfy a merger condition, and obtaining a road segment by merging the at least two neighboring road units.
10. The method of any one or more of the solutions herein, further comprising: merging the multiple data frames of each of the at least two road units into a data bag corresponding to the road segment.
11. The method of any one or more of the solutions herein, further comprising: determining a segment confidence level of the road segment based on the unit confidence levels of the at least two road units.
12. The method of any one or more of the solutions herein, further comprising: obtaining a plurality of road segments, wherein each of the road segment is obtained by merging at least two neighboring road units that satisfy a merger condition.
13. The method of any one or more of the solutions herein, further comprising: causing a road representation of the road to be output to a display, wherein the road representation comprises a plurality of segment representations each of which corresponds to one of the plurality of road segments and relates to a segment confidence level of the road segment.
14. The method of any one or more of the solutions herein, wherein a difference between segment confidence levels of any two neighboring road segments along the road fails to satisfy the merger condition.
15. The method of any one or more of the solutions herein, further comprising: obtaining a plurality of data bags each of which corresponds to one of the plurality of road segments.
16. The method of any one or more of the solutions herein, further comprising: obtaining a trajectory on which each of a plurality of candidate users is operating or is expected to drive; identifying, based on the trajectories, a target user from the plurality of candidate users; and transmitting the processed map or a notification regarding the processed map to the target user before the target user reaches the road.
17. The method of any one or more of the solutions herein, wherein the candidate users comprise the autonomous vehicle.
18. The method of any one or more of the solutions herein, wherein the identifying, based on the trajectories, the target user from the plurality of candidate users before the target user reaches the road comprises: determining, based on the trajectory of the target user, that the target user is within a range from the road and moves toward the road.
19. The method of any one or more of the solutions herein, wherein: the processed map comprises an updated map that is generated based on the sensor dataset, and the notification comprises a prompt inviting an acceptance of the processed map.
20. A system of maintaining a map, comprising: a processor configured to implement a method recited in one or more of solutions herein.
21. The system of any one or more of the solutions herein, further comprising a transmitter configured to transmit a processed map to an autonomous vehicle.
22. The system of any one or more of the solutions herein, wherein the processor is located outside the autonomous vehicle.
23. The system of any one or more of the solutions herein, wherein the processor is configured to receive a sensor dataset of a road represented in the map, the sensor dataset being acquired by a sensor subsystem that is located at a different location than the processor.
24. The system of any one or more of the solutions herein, wherein the map has an accuracy level of below 50 centimeters.
25. The system of any one or more of the solutions herein, further comprising a navigation unit configured to determine a driving path for the autonomous vehicle based on the processed map, and a control unit configured to control the vehicle to travel along the determined driving path for the vehicle.
26. An apparatus for maintaining a map comprising a processor, configured to implement one or more of any solutions herein.
27. A computer readable program storage medium having code stored thereon, the code, when executed by a processor, causing the processor to implement one or more solutions herein.
28. The method of any one or more of the solutions herein, further comprising determining a driving path for the autonomous vehicle based on the processed map, and guiding the autonomous vehicle to travel along the determined driving path.

Some embodiments relate to an apparatus for maintaining a map suitable for autonomous vehicle operation comprising a processor, configured to implement a method recited in this document. Some embodiments relate to a computer readable program storage medium having code stored thereon, the code, when executed by a processor, causing the processor to implement a method recited in this patent document. Some embodiments of the present disclosure relate to an autonomous vehicle in communication with the system 200.

In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

### APPENDIX A

### Map Checker (Backend)

There is no user interaction at this stage. The platform checks the latest version of a main map.
- Truck and mapping vehicle data collection constantly add new datasets
- There is a list of active maps that need to be up-to-date all the time
- Currently default maps are maintained
- Map update tool is constantly checking new coming datasets with active maps
- Once checker modules (e.g., map checker 310) find inconsistencies, it generates a list of results
- The road segment status on the existing results is not removed after loading new results

### Confidence Level of a Road Segment

- At phase 1, confidence level compared with a preset confidence threshold for sensitivity testing
- For each road segment, confidence level keeps accumulating from new bags (e.g., sensor datasets)
- Confidence level is a reference of priority
- If the segment status is 'unverified', 'under fixing' or 'map update needed', the confidence level may continue to accumulate on the same segment. The priorities may be used to indicate the order in which the segments need to be updated.
- If a segment is marked as 'fixed' or 'no issue', the confidence level may stop accumulating and/or reset for this segment. If there is a new result for this segment, the confidence level may start accumulating in a new segment record.
- Confidence level accuracy
   ∘ There may be a threshold of confidence level for results generated for users
   ∘ The scale of confidence level may assist to distinguish between road update or not
   ∘ The calculation may consider a variety of factors, including road object projection angle, camera views, etc., to prevent false positives or false negatives

### User Notification and Docker Initiation

- Users may receive notifications from map bot (on slack) when there is new update to map update checker result list

### Users Enter Map Update Tool - Result List & Map View

- Users enter Map Update Checker via Map Infra Tool or initiate a docker via a cloud service
- At the landing page, the user can see a list of checker results and a map view
- The results are categorized by map name. In this way, map team can easily identify which map(s) need maintenance and figure out priorities of the map(s) to be processed.
- Result list includes the following result information:
   ∘ Base map name
      - map start/end GPS coordinates
      - status icon (overall status)
         ∘ map maintenance required (declined)
         ∘ map maintenance not required (approved)
         ∘ unverified
         ∘ map maintenance ongoing (fixing)
         ∘ map maintenance completed (fixed)

      ii. type of road changes
         - road marker change (blob checker)
         - others
      iii. segment names
         - start/end timestamps
         - start/end GPS coordinates
         - status icon
            ∘ map maintenance required (declined)
            ∘ map maintenance not required (approved)
            ∘ unverified
            ∘ map maintenance ongoing (fixing)
            ∘ map maintenance completed (fixed)
         - issue detected (top 2 may be most common)
            ∘ 0: normal
            ∘ 1: contour error
            ∘ 2: road marker change
            ∘ 3: road marker shift
      iv. bag names
- Map view display the visualization of checker results based on user operations
- Result list filtering/sorting
   ∘ In each map. the segment/bag is sorted by latest update to oldest by default
   ∘ filter by status: unverified/need map update/no map update/fixing
   ∘ filter by confidence level: (0-0.2)(0.21-0.4)(0.41-0.6)(0.61-0.8)(0.81 and above)
   ∘ sort by confidence level
   ∘ The filtering and sorting operation may be associated with the filtering and sorting on map view

### Result List & Map View Operations

- The length and width of the result list is adjustable
- Each section in result list can be collapsed or opened
- Map view display the visualization of checker results
   ∘ The latest results may be added on a top layer of the displayed map
   ∘ When the user clicks on the base map name, the map (including, e.g., location and/or orientation information of a road or route in the map) may be visualized on map view.
   ∘ When the user clicks on a segment under a map, the segment is highlighted on the route.
   ∘ When the user clicks on a bag under a segment, there may be a pop-up window for result validation.
      i. The pop-out window can zoom in/out, move around and closed
      ii. In the pop-out window, segment information is displayed:
         - bag name
         - segment timestamp (start/end)
         - segment GPS(start/end)
         - type of road change
         - current timestamp (in the camera view)
         - current GPS (in the camera view)
         - zoom in/out button
         - quantified confidence level
         - issue detected (top 2 most common)
            ∘ 0: normal
            ∘ 1: contour error
            ∘ 2: road marker change
            ∘ 3: road marker shift
      iii. The checker result generate a short video clip of camera view for users to verify if map update is required
      iv. Base map blob (road object) is projected in video clip so that the user can verify
      v. There are 2 buttons for users to categorize whether maintenance required for the map or not
         - Map update required
            ∘ If map update is needed, the platform may request a map update through a task distribution system
               i. provide an option to request a map update
               ii. provide selection of road segments to be updated
               iii. auto fill in
                  - bag name (s)
                  - issue detected (root cause)
                  - gps coordinates
                  - bag timestamps
         - No map update required
      vi. There is a progress bar controller at the button of the pop-out window for users to
         - replay the camera view
         - identify current timestamp
         - set interval (100 microseconds (ms))
      vii. There is a 'car' icon on the highlighted segment corresponding to timestamps of video clip

### Verification Status

- Once the user categorizes whether the segment leads to a map update or not, the status icon next to the segment may be updated.
- The overall status icon on the map reflects the aggregated results
   ∘ if there are unverified segment, shows 'unverified'
   ∘ if there are 'map update required' segments but no 'unverified', shows 'map update required'
   ∘ if all are 'no issue', shows 'no issue'
   ∘ significance level ranking: unverified(0) > map update required(1) > fixing(2) > fixed(3) > no issue
- In 'setting', there is a 'show all segment status' button to trigger visualization of each segment on the map and reflect segment status
- In 'setting', there is a `show all segments' button to highlight each segment location on the map

### Geo Query

In a map view, the platform may provide geo query features, which may include:
- **gps location marker:** Allow users to enter a set of GPS coordinates (latitude and longitude). After submitting, the location may be marked on the map.
- **one-click location marker:** Allow users to click on the map and mark a location on the map.

Detailed steps:
- The platform may provide a button for users to select one of the options
- When adding a marker, the platform may display the list of marked location on a list
- When clicking on the marker, the platform may display GPS information
- When clicking on the items on the list, the map may switch focus to the marker location
- The feature may offer the option to
   ∘ delete marker(s)
   ∘ delete all markers
   ∘ hide the list

## Claims

1. A method of maintaining a map, comprising:
receiving a sensor dataset acquired by a sensor subsystem, wherein:
the sensor dataset includes information about a road,
the sensor subsystem comprises multiple different types of sensors including at least one of a camera, a light detection and ranging (LiDAR) sensor, a positioning sensor, a radar sensor, or a mapping sensor, and
the sensor dataset has a first spatial accuracy level of 50 centimeters or lower;
determining, by a processor, a confidence level by comparing the sensor dataset and the map that includes prior information about the road, wherein the map has a second spatial accuracy level of 50 centimeters or lower;
in response to determining that the confidence level exceeds a confidence threshold, processing the map by the processor; and
storing the processed map as an electronic file, wherein the processed map is configured to guide an autonomous vehicle to operate on the road.

2. The method of claim 1, further comprising:
in response to determining that the confidence level exceeds the confidence threshold,
causing a notification to be transmitted to an operator; and
receiving an input from the operator indicating at least one of: maintaining the map, or updating the map based on the sensor dataset; and
the processing the map comprises processing the map according to the input.

3. The method of claim 1, wherein:
the road comprises a first plurality of road units;
the sensor dataset comprises a second plurality of data frames each of which corresponds to a portion of the road represented in the data frame; and
each of the first plurality of road units corresponds to multiple data frames of the sensor dataset.

4. The method of claim 3, wherein the comparing the sensor dataset and the map comprises:
for each of the first plurality of road units, determining a unit confidence level.

5. The method of claim 4, wherein:
the determining that the confidence level exceeds a threshold comprises determining that a unit confidence level of each of at least one of the first plurality of road units exceeds the confidence threshold, and
the processing the map comprises: for each of the at least one road unit whose unit confidence level exceeds the confidence threshold, updating, based on multiple data frames of the sensor dataset of the road unit, a portion of the map that corresponds to the road unit.

6. The method of claim 4, wherein the determining the unit confidence level for a road unit comprises:
for each of the multiple data frames corresponding to the road unit, identifying a corresponding portion of the map based on position
information of the portion of the road represented in the data frame; and determining a frame confidence level by comparing the data frame with the corresponding portion of the map, and
determining the unit confidence level of the road unit based on the multiple frame confidence levels,
optionally wherein the determining the unit confidence level of the road unit based on the multiple frame confidence levels comprises:
designating a sum of the multiple frame confidence levels as the unit confidence level of the road unit.

7. The method of claim 4, further comprising:
identifying at least two neighboring road units along the road that satisfy a merger condition, and
obtaining a road segment by merging the at least two neighboring road units.

8. The method of claim 7, further comprising:
merging the multiple data frames of each of the at least two road units into a data bag corresponding to the road segment.

9. The method of claim 7 or 8, further comprising:
determining a segment confidence level of the road segment based on the unit confidence levels of the at least two road units.

10. The method of claim 5, further comprising:
obtaining a plurality of road segments, wherein each of the road segment is obtained by merging at least two neighboring road units that satisfy a merger condition;
and optionally wherein a difference between segment confidence levels of any two neighboring road segments along the road fails to satisfy the merger condition.

11. The method of claim 12, further comprising:
causing a road representation of the road to be output to a display, wherein the itemroad representation comprises a plurality of segment representations each of which corresponds to one of the plurality of road segments and relates to a segment confidence level of the road segment.

12. The method of any preceding claim, further comprising:
obtaining a trajectory on which each of a plurality of candidate users is operating or is expected to drive;
identifying, based on the trajectories, a target user from the plurality of candidate users; and
transmitting the processed map or a notification regarding the processed map to the target user before the target user reaches the road.

13. The method of claim 12, wherein the identifying, based on the trajectories, the target user from the plurality of candidate users before the target user reaches the road comprises:
determining, based on the trajectory of the target user, that the target user is within a range from the road and moves toward the road.

14. A system for maintaining a map, comprising: a processor configured to implement a method recited in one or more of claims 1-13.

15. A computer readable program storage medium having code stored thereon, the code, when executed by a processor, causing the processor to implement a method recited in one or more of claims 1 to 13.
